# EUROPEAN PATENT APPLICATION

(11) **EP 4 642 094 A1**
(43) Date of publication of application: **29.10.2025**
(21) Application number: 24752674.2
(22) Date of filing: 17.01.2024
(51) Int. Cl.: H04W 36/00

(54) **COMMUNICATION METHOD AND APPARATUS, NETWORK DEVICE, TERMINAL DEVICE, AND STORAGE MEDIUM**

(30) Priority: 06.02.2023 CN 202310114046
(71) Applicant: CHINA MOBILE COMMUNICATION CO., LTD RESEARCH INSTITUTE, Beijing 100053 (CN); CHINA MOBILE COMMUNICATIONS GROUP CO., LTD., Beijing 100032 (CN)
(72) Inventor: TAN, Jiayao, Beijing 100053 (CN); CHEN, Ningyu, Beijing 100053 (CN)
(74) Representative: GPI Brevets
(86) International application number: PCT/CN2024/072817
(87) International publication number: WO 2024/164817

(57) **Abstract**

A communication method and apparatus, network device, UE and storage medium are provided, which relate to the technical field of communications. The method includes: a MN sends a RRC reconfiguration message to the UE, the RRC reconfiguration message includes at least one of: at least one SN counter value or set of SN counter values configured for each candidate PSCell and/or SCG; at least one SN counter value or set of SN counter values configured for all candidate PSCells and/or SCGs of each SN; or at least one SN counter value or set of SN counter values configured for all candidate PSCells and/or SCGs. A new key is determined through the SN counter value and used to enhance the communication security between the UE and the SN. Furthermore, SN counter values are configured in the RRC reconfiguration message to reduce signaling overhead of subsequent updates of the SN counter value.

## Description

### CROSS-REFERENCE TO RELATED APPLICATION

The present disclosure is based on and claims the priority to the Chinese patent application No. 202310114046.5 filed on February 6, 2023, which is incorporated herein by reference in its entirety.

### TECHNICAL FIELD

The present disclosure relates to the technical field of communications, and in particular to a communication method and apparatus, a network device, a user equipment and a storage medium.

### BACKGROUND

In a New Radio (NR) Dual Connectivity (NR-DC) scenario, especially for FR2 (Frequency Range 2), in order to reduce the latency and signaling load associated with cell change, a technical approach of selective activation of the cell group is proposed. This approach aims to enable continuous cell group activation or change without Radio Resource Control (RRC) reconfiguration for the User Equipment (UE), or restarting the procedure of Conditional Primary Secondary Cell Change (CPC) or Conditional Primary Secondary Cell Addition (CPA). The cell group here includes at least a Secondary Cell Group (SCG).

In the traditional dual connectivity scenario, the UE and a Secondary Node (SN) communicate by using the same SN key *K_{SN},* which is generated based on the security key *K_{SN}* of the Master Node (MN) *K_{MN},* and an SN counter value which is associated by the MN. In a selective activation of the cell group scenario, since RRC reconfiguration is not expected during the entire procedure, the UE can only obtain the SN counter value from an initial RRC reconfiguration message to generate *K_{SN}.* When the UE returns to or accesses the same Primary Secondary Cell (PSCell) or the SCG again, the UE may not be able to communicate properly with the SN due to the inability to obtain the latest *K_{SN}*. In addition, when an initial RRC reconfiguration message includes multiple candidate PSCell or SCG configurations, there may be a potential security risk in the communication between the UE and the SN.

### SUMMARY

To solve related technical problems, the embodiments of the present disclosure provide a communication method and apparatus, a network device, a User Equipment (UE) and a storage medium.

According to a first aspect of an embodiment of the present disclosure, a communication method is provided, applied to a Master Node (MN). The method includes:
sending a Radio Resource Control (RRC) reconfiguration message to a User Equipment (UE), wherein the RRC reconfiguration message includes at least one of the followings:
at least one Secondary Node (SN) counter value or at least one set of SN counter values configured for each candidate Primary Secondary Cell (PSCell) and/or each candidate Secondary Cell Group (SCG);
at least one SN counter value or at least one set of SN counter values configured for all candidate PSCells and/or all candidate SCGs of each SN; or
at least one SN counter value or at least one set of SN counter values configured for all candidate PSCells and/or all candidate SCGs.

In the above solutions, the number or the cumulative number of SN counter values configured for each candidate PSCell and/or each candidate SCG is used to indicate the maximum number of times allowed to return to or access a same candidate PSCell and/or a same candidate SCG.

In the above solutions, the number or the cumulative number of SN counter values configured for all candidate PSCells and/or all candidate SCGs of each SN is used to indicate the maximum number of times allowed to return to or access a same SN.

In the above solutions, the number or the cumulative number of SN counter values configured for all candidate PSCells and/or all candidate SCGs is used to indicate the maximum number of times allowed to selectively activate the PSCell and/or the SCG.

In the above solutions, at least one SN counter value or at least one set of SN counter values is indicated by at least one of the followings:
at least one SN counter value;
a range of SN counter values and one or more increments;
one SN counter value, one variation range, and one or more increments; or
one SN counter value and one or more increments;
wherein the increment is an increment of the SN counter value.

In the above solutions, the multiple increments are used to indicate at least one of the followings:
different increments are used when the UE returns to or accesses a same candidate PSCell and/or a same candidate SCG again or for two consecutive times;
different increments are used when the UE performs selective activation of the PSCell and/or the SCG again or for two consecutive times;
different increments are used when the UE accesses the candidate PSCell and/or the candidate SCG again or for two consecutive times; or
different increments are used when the UE returns to or accesses a same SN again or for two consecutive times.

In the above solutions, the RRC reconfiguration message further includes first information, and the first information is used to indicate at least one of the followings:
whether the SN counter value is recyclable or reusable;
a validity duration of the SN counter value; or
the number of times for validity of the SN counter value.

In the above solutions, one piece of first information corresponds to one SN counter value; or
one piece of first information corresponds to the SN counter value of one candidate PSCell and/or one candidate SCG; or
one piece of first information corresponds to the SN counter values of all candidate PSCells and/or all candidate SCGs; or
one piece of first information corresponds to the SN counter value of one SN.

In the above solutions, in the case that the first information indicates that the SN counter value is recyclable or reusable, only one SN counter value of one candidate PSCell and/or one candidate SCG is used to indicate that a same SN counter value is used when the UE returns to or accesses a same candidate PSCell and/or a same candidate SCG again or each time.

In the above solutions, in the case that the first information indicates that the SN counter value is recyclable or reusable, only one SN counter value of all candidate PSCells and/or all candidate SCGs of one SN is used to indicate that a same SN counter value is used when the UE returns to or accesses a same SN again or each time.

In the above solutions, in the case that the first information indicates that the SN counter value is recyclable or reusable, only one SN counter value of all candidate PSCells and/or all candidate SCGs is used to indicate at least one of the followings:
a same SN counter value is used when the UE performs selective activation of the PSCell and/or the SCG again or each time; or
a same SN counter value is used when the UE accesses the candidate PSCell and/or the candidate SCG again or each time.

In the above solutions, different SN counter values of one candidate PSCell and/or one candidate SCG are used to indicate that different SN counter values are used when the UE returns to or accesses a same candidate PSCell and/or a same candidate SCG again or each time or for two consecutive times.

In the above solutions, different SN counter values of all candidate PSCells and/or all candidate SCGs of one SN are used to indicate that different SN counter values are used when the UE returns to or accesses a same SN again, each time, or for two consecutive times.

In the above solutions, different SN counter values of all candidate PSCells and/or all candidate SCGs are used to indicate at least one of the followings:
different SN counter values are used when the UE performs selective activation of the PSCell and/or the SCG again or each time or for two consecutive times; or different SN counter values are used when the UE accesses the candidate PSCell and/or the candidate SCG again, each time, or for two consecutive times.

In the above solutions, in the case that there is only one SN counter value of one candidate PSCell and/or one candidate SCG, or only one SN counter value of one SN, or only one SN counter value of all candidate PSCells and/or all candidate SCGs, the method further includes:
indicating an updated SN counter value to the UE in the case that the SN counter value is invalid, or the UE fails to access the SN by using the SN counter value.

In the above solutions, the method further includes:
storing a used SN counter value and automatically updating the SN counter value.

According to a second aspect of an embodiment of the present disclosure, a communication method is further provided, performed by a User Equipment (UE), and the method includes:
receiving a Radio Resource Control (RRC) reconfiguration message sent by a Master Node (MN), wherein the RRC reconfiguration message includes at least one of the followings: at least one Secondary Node (SN) counter value or at least one set of SN counter values configured for each candidate Primary Secondary Cell (PSCell) and/or each candidate Secondary Cell Group (SCG);
at least one SN counter value or at least one set of SN counter values configured for all candidate PSCells and/or all candidate SCGs of each SN; or
at least one SN counter value or at least one set of SN counter values configured for all candidate PSCells and/or all candidate SCGs.

In the above solutions, the number or the cumulative number of SN counter values configured for each candidate PSCell and/or each candidate SCG is used to indicate the maximum number of times allowed to return to or access a same candidate PSCell and/or a same candidate SCG.

In the above solutions, the number or the cumulative number of SN counter values configured for all candidate PSCells and/or all candidate SCGs of each SN is used to indicate the maximum number of times allowed to return to or access a same SN.

In the above solutions, the number or the cumulative number of SN counter values configured for all candidate PSCells and/or all candidate SCGs is used to indicate the maximum number of times allowed to selectively activate the PSCell and/or the SCG.

In the above solutions, the configured at least one SN counter value or at least one set of SN counter values is indicated by at least one of the followings:
at least one SN counter value;
a range of SN counter values and one or more increments;
one SN counter value, one variation range, and one or more increments; or one SN counter value and one or more increments;
wherein the increment is an increment of the SN counter value.

In the above solutions, the multiple increments are used to indicate at least one of the followings:
different increments are used when the UE returns to or accesses a same candidate PSCell and/or a same candidate SCG again or for two consecutive times; different increments are used when the UE performs consecutive selective activation of the SCG again or for two consecutive times; different increments are used when the UE accesses the candidate PSCell or the candidate SCG again or for two consecutive times; or different increments are used when the UE returns to or accesses a same SN again or for two consecutive times.

In the above solutions, in the case that there is no available SN counter value, the method further includes at least one of the followings:
no longer returning to, or accessing, or evaluating the candidate PSCell and/or the candidate SCG corresponding to the SN counter value;
no longer returning to, or accessing, or evaluating the SN corresponding to the SN counter value;
no longer returning to, or accessing, or evaluating all candidate PSCells and/or all candidate SCGs of the SN corresponding to the SN counter value;
deleting the configuration of the corresponding candidate PSCell and/or the corresponding candidate SCG;
deleting the configuration of all candidate PSCells and/or all candidate SCGs of the corresponding SN;
no longer returning to, or accessing, or evaluating all candidate PSCells and/or all candidate SCGs;
deleting the configuration of all candidate PSCells and/or all candidate SCGs; or
stopping the procedure of selective activation of the PSCell and/or the SCG.

In the above solutions, the RRC reconfiguration message further includes first information, and the first information is used to indicate at least one of the followings:
whether the SN counter value is recyclable or reusable;
a validity duration of the SN counter value; or
the number of times for validity of the SN counter value.

In the above solutions, one piece of first information corresponds to one SN counter value; or
one piece of first information corresponds to the SN counter value of one candidate PSCell and/or one candidate SCG; or one piece of first information corresponds to the SN counter values of all candidate PSCells and/or all candidate SCGs; or one piece of first information corresponds to the SN counter value of one SN.

In the above solutions, the method further includes:
determining the SN counter value to be used when performing at least one of the followings: accessing or returning to a same SN; accessing or returning to a same candidate PSCell and/or a same candidate SCG; accessing the candidate PSCell and/or SCG; or selective activation of the PSCell and/or the SCG.

In the above solutions, the method further includes at least one of the followings:
in the case that there is only one SN counter value of one candidate PSCell and/or SCG, and the first information indicates that the SN counter value is recyclable or reusable, a same SN counter value is used each time when returning to or accessing a same candidate PSCell or a same candidate SCG; in the case that there is only one SN counter value of all candidate PSCells and/or SCGs of one SN, and the first information indicates that the SN counter value is recyclable or reusable, a same SN counter value is used each time when returning to or accessing a same SN; or in the case that there is only one SN counter value of all candidate PSCells and/or SCGs, and the first information indicates that the SN counter value is recyclable or reusable, a same SN counter value is used each time when performing selective activation of the PSCell or the SCG, or a same SN counter value is used each time when accessing the candidate PSCell or the candidate SCG.

**In** the above solutions, the method further includes at least one of the followings:
in the case that one candidate PSCell and/or one candidate SCG has different SN counter values, different SN counter values are used in sequence when returning to or accessing a same candidate PSCell or a same candidate SCG again or each time or for two consecutive times; in the case that all candidate PSCells and/or SCGs have different SN counter values, different SN counter values are used in sequence when performing selective activation of the PSCell or the SCG again or each time or for two consecutive times, or different SN counter values are used in sequence when accessing the candidate PSCell or the candidate SCG again or each time or for two consecutive times; or in the case that one SN has different SN counter values, different SN counter values are used in sequence when returning to or accessing a same SN again or each time or for two consecutive times.

In the above solutions, in the case that the validity duration and/or the number of times for validity of the SN counter value indicated by the first information is exceeded, the method further includes at least one of the followings:
deleting or no longer using the SN counter value;
no longer returning to, or accessing, or evaluating the candidate PSCell and/or the candidate SCG corresponding to the SN counter value;
no longer returning to, or accessing, or evaluating the SN corresponding to the SN counter value;
no longer returning to, or accessing, or evaluating all candidate PSCells and/or all candidate SCGs of the SN corresponding to the SN counter value;
deleting the configuration of the corresponding candidate PSCell and/or the corresponding candidate SCG;
deleting the configuration of all candidate PSCells and/or all candidate SCGs of the corresponding SN;
no longer returning to, or accessing, or evaluating all candidate PSCells and/or all candidate SCGs;
deleting the configuration of all candidate PSCells and/or all candidate SCGs; or
stopping the procedure of selective activation of the PSCell and/or the SCG.

In the above solutions, in the case that there is only one SN counter value of one candidate PSCell and/or one candidate SCG, or only one SN counter value of one SN, or only one SN counter value of all candidate PSCells and/or all candidate SCGs, the method further includes:
receiving an updated SN counter value indicated by the MN in the case that the SN counter value is invalid, or the UE fails to access the SN by using the SN counter value.

In the above solutions, the method further includes:
using a second SN counter value to access a first SN in the case that at least one of the followings is met:
the first SN counter value is invalid;
accessing to the first SN by using the first SN counter value fails; or
the first SN rejects to be accessed;
wherein the first SN counter value and the second SN counter value are both SN counter values for the first SN in the RRC reconfiguration message.

In the above solutions, the method further includes:
storing a used SN counter value and automatically updating the SN counter value.

According to a third aspect of an embodiment of the present disclosure, a communication apparatus is further provided, including:
a first sending unit configured to send a Radio Resource Control (RRC) reconfiguration message to a User Equipment (UE); wherein the RRC reconfiguration message includes at least one of the followings:
at least one Secondary Node (SN) counter value or at least one set of SN counter values configured for each candidate Primary Secondary Cell (PSCell) and/or each candidate Secondary Cell Group (SCG);
at least one SN counter value or at least one set of SN counter values configured for all candidate PSCells and/or all candidate SCGs of each SN; or
at least one SN counter value or at least one set of SN counter values configured for all candidate PSCells and/or all candidate SCGs.

According to a fourth aspect of an embodiment of the present disclosure, a communication apparatus is further provided, including:
at least one Secondary Node (SN) counter value or at least one set of SN counter values configured for each candidate Primary Secondary Cell (PSCell) and/or all candidate Secondary Cell Group (SCG);
at least one SN counter value or at least one set of SN counter values configured for all candidate PSCells and/or all candidate SCGs of each SN; or
at least one SN counter value or at least one set of SN counter values configured for all candidate PSCells and/or all candidate SCGs.

According to a fifth aspect of an embodiment of the present disclosure, a network device is further provided, including a first processor and a first communication interface, wherein
the first communication interface is configured to send a Radio Resource Control (RRC) reconfiguration message to a User Equipment (UE), wherein the RRC reconfiguration message includes at least one of the followings:
at least one Secondary Node (SN) counter value or at least one set of SN counter values configured for each candidate Primary Secondary Cell (PSCell) and/or each candidate Secondary Cell Group (SCG);
at least one SN counter value or at least one set of SN counter values configured for all candidate PSCells and/or all candidate SCGs of each SN; or
at least one SN counter value or at least one set of SN counter values configured for all candidate PSCells and/or all candidate SCGs.

According to a sixth aspect of an embodiments of the present disclosure, a User Equipment (UE) is further provided, including a second processor and a second communication interface, wherein
the second communication interface is configured to receive a Radio Resource Control (RRC) reconfiguration message sent by a Master Node (MN), wherein the RRC reconfiguration message includes at least one of the followings:
at least one Secondary Node (SN) counter value or at least one set of SN counter values configured for each candidate Primary Secondary Cell (PSCell) and/or each candidate Secondary Cell Group (SCG);
at least one SN counter value or at least one set of SN counter values configured for all candidate PSCells and/or all candidate SCGs of each SN; or
at least one SN counter value or at least one set of SN counter values configured for all candidate PSCells and/or all candidate SCGs.

According to a seventh aspect of an embodiment of the present disclosure, a network device is further provided, including a first processor and a first memory configured to store a computer program executable on the first processor,
wherein the first processor is configured to execute the computer program, to implement the steps of any of the above-mentioned methods on the MN side.

According to an eighth aspect of an embodiments of the present disclosure, a User Equipment (UE) is further provided, including a second processor and a second memory configured to store a computer program executable on the second processor,
wherein the second processor is configured to execute the computer program, to implement the steps of any one of the above-mentioned methods on the UE side.

According to a ninth aspect of an embodiment of the present disclosure, a storage medium is also provided, on which a computer program is stored. The computer program is used to be executed by a processor to implement the steps of any of the above-mentioned methods on the MN side, or implement the steps of any of the above-mentioned methods on the UE side.

In the communication method and apparatus, the network device, the user equipment and the storage medium provided in the present disclosure, the MN sends a Radio Resource Control (RRC) reconfiguration message to the UE, and the UE receives the RRC reconfiguration message sent by the MN, wherein the RRC reconfiguration message includes at least one of the followings: at least one Secondary Node (SN) counter value or at least one set of SN counter values configured for each candidate Primary Secondary Cell (PSCell) and/or each candidate Secondary Cell Group (SCG); at least one SN counter value or at least one set of SN counter values configured for all candidate PSCells and/or all candidate SCGs of each SN; or at least one SN counter value or at least one set of SN counter values configured for all candidate PSCells and/or all candidate SCGs. Through the above solutions, the MN can configure appropriate SN counter values for the candidate PSCell and/or the candidate SCG through the RRC reconfiguration message, enabling the UE in the NR-DC scenario to determine the SN counter value used to perform selective activation of the cell group from the configured SN counter value. Accordingly, it may determine a new SN counter value through the obtained SN counter value *K_{SN},* and use the new *K_{SN}* to communicate with the SN, thereby enhancing the communication security between the UE and the SN.

### BRIEF DESCRIPTION OF THE DRAWINGS

FIG. 1 is a schematic flowchart of a communication method according to an embodiment of the present disclosure.
FIG. 2 is a schematic flowchart of a communication method according to an embodiment of the present disclosure.
FIG. 3 is a schematic structural diagram of a communication apparatus according to an embodiment of the present disclosure.
FIG. 4 is a schematic structural diagram of a communication apparatus according to an embodiment of the present disclosure.
FIG. 5 is a schematic structural diagram of a network device according to an embodiment of the present disclosure.
FIG. 6 is a schematic structural diagram of a user equipment according to an embodiment of the present disclosure.

### DETAILED DESCRIPTION

In a New Radio (NR) Dual Connectivity (NR-DC) scenario, especially for FR2 (Frequency Range 2), in order to achieve continuous cell group activation or change without requiring a User Equipment (UE) to be subjected to Radio Resource Control (RRC) reconfiguration or restarting the processes of Conditional Primary Secondary Cell Change (CPC) or Conditional Primary Secondary Cell Addition (CPA), a network pre-configures multiple candidate Primary Secondary Cell (PSCell)/Secondary Cell Group (SCG) configurations and associated execution conditions to the UE through the RRC reconfiguration message. The UE selects an appropriate PSCell/SCG by evaluating the execution conditions. Once the UE selects a PSCell/SCG, unlike traditional CPA/CPC, it does not release the stored configurations but retains the previous configuration and continue to evaluate the execution conditions to select the next appropriate PSCell/SCG. In the discussion of the standard, this process may be referred to as selective activation of the cell group or change, continuous cell group activation or change, selective PSCell activation or change, selective SCG activation or change, continuous CPC/CPA, continuous PSCell or SCG activation or change. In this process, it is not expected for the network to perform RRC reconfiguration on the UE.

In the traditional dual connectivity scenario, a Master Node (MN) generates an SN (Secondary Node) key *K_{SN}* and sends it to the SN. In addition, the MN associates an SN counter value and sends the SN counter value to the UE through an RRC reconfiguration message. The UE generates the *K_{SN}* based on the MN's security key *K_{MN}* and the SN counter value. In this way, the UE and the SN can obtain the same *K_{SN}* and use it for communication. The UE does not store the SN counter value. Whenever the *K_{SN}* needs to be updated, the MN will send the updated *K_{SN}* to the SN and the updated SN counter value to the UE, enabling the UE to generate a new *K_{SN}.*

Each time a Radio Bearer (RB) is added to a same SN, the MN must assign an RB identifier (ID) that has not been used since the last *K_{SN}* update. When an unused RB ID cannot be assigned to this RB due to the size limitation of the RB ID, the MN should increase the SN counter value and calculate a new *K_{SN},* and then update the *K_{SN}* through an SN modification procedure and send the new SN counter value to the UE.

In a selective activation of the cell group scenario, since the RRC reconfiguration is not expected to occur throughout the process, the UE can only obtain the SN counter value from an initial RRC reconfiguration message. For example, for a UE moving in a shopping mall or within a limited area, it may access a PSCell or SCG that it has previously accessed. If the UE is allowed to return to the PSCell or SCG that it has previously accessed, it can only obtain the SN counter value from an initial RRC reconfiguration message.

If only one SN counter value is configured in an initial RRC reconfiguration message, this SN counter value can be used for one selective activation of the cell group. When the UE returns to or accesses a same PSCell or SCG again, the original SN counter value may have become invalid. For example, due to the above-mentioned RB ID size limitation, the SN counter value has changed. If the UE continues to use the original SN counter value, it cannot derive the latest *K_{SN},* and as a result, the UE cannot communicate properly with the SN due to the inability to obtain the latest *K_{SN}.* In addition, an initial RRC reconfiguration message will include multiple candidate PSCell or SCG configurations. If all candidate PSCells or SCGs use a same SN counter value, there will also be potential security risks in the communication between the UE and the SN.

In order to overcome the above problems, the present disclosure proposes a solution. In this solution, the MN sends an RRC reconfiguration message to a User Equipment (UE), and the UE receives the RRC reconfiguration message sent by the MN, wherein the RRC reconfiguration message includes at least one of the followings: at least one SN counter value or at least one set of SN counter values configured for each candidate PSCell and/or SCG, at least one SN counter value or at least one set of SN counter values configured for all candidate PSCells and/or SCGs of each SN, and at least one SN counter value or at least one set of SN counter values configured for all candidate PSCells and/or SCGs. In this way, the MN can configure appropriate SN counter values for the candidate PSCell and/or SCG through the RRC reconfiguration message, enabling the UE in the NR-DC scenario to determine the SN counter value used to perform selective activation of the cell group from the configured SN counter value. Accordingly, it may determine a new *K_{SN}* through the obtained SN counter value, and use the new *K_{SN}* to communicate with the SN, thereby enhancing the communication security between the UE and the SN.

The present disclosure is further described in detail below with reference to the accompanying drawings and embodiments.

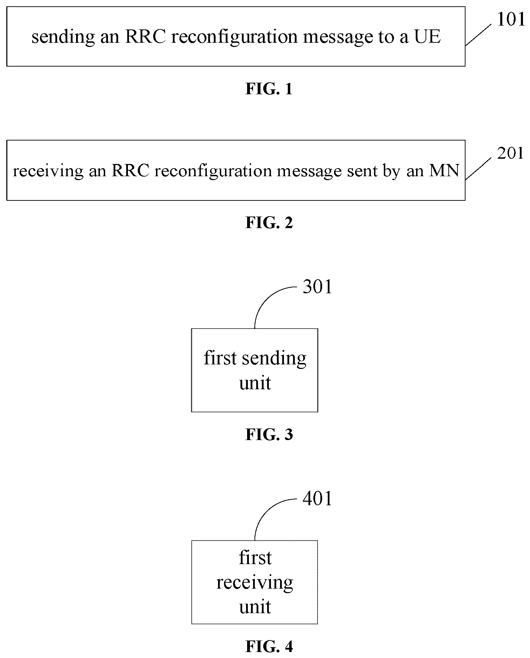

The present disclosure provides a communication method, which is performed by a Master Node (MN) in dual connectivity, such as the MN in an NR-DC scenario. The MN is also referred to as an anchor point, including a base station and/or a network device, etc. As shown in FIG. 1, the method includes:
step 101: sending an RRC reconfiguration message to a user equipment; the RRC reconfiguration message includes at least one of the followings:
at least one SN counter value or at least one set of SN counter values configured for each candidate PSCell and/or SCG;
at least one SN counter value or at least one set of SN counter values configured for all candidate PSCells and/or all candidate SCGs of each SN; or
at least one SN counter value or at least one set of SN counter values configured for all candidate PSCells and/or SCGs.

The MN may configure the SN counter value of each candidate PSCell and/or SCG. The SN counter values configured for different candidate PSCells and/or SCGs may be partially or completely the same, or completely different. The MN can also configure the SN counter value of all candidate PSCells and/or SCGs of each SN. The SN counter values configured for candidate PSCells and/or SCGs of different SNs can be partially or completely the same, or completely different. In this case, the configured SN counter value is shared by all candidate PSCells and/or SCGs of a given SN. The MN can also configure the SN counter value of all candidate PSCells and/or SCGs. In this case, the configured SN counter value is shared by all candidate PSCells and/or SCGs.

Each candidate PSCell and/or SCG refers to each candidate PSCell and/or each candidate SCG. All candidate PSCells and/or SCGs refer to all candidate PSCells and/or all candidate SCGs. At least one SN counter value or at least one set of SN counter values refers to at least one SN counter value or at least one set of SN counter values. At least one set of SN counter values includes at least one SN counter value. The SN counter value can also be referred to as the SN count value.

It should be noted that when the RRC reconfiguration message includes at least two SN counter values, these SN counter values are different from each other.

In an embodiment, the RRC reconfiguration message further includes first information, and the first information is used to indicate at least one of the followings:
whether the SN counter value is recyclable or reusable;
a validity duration of the SN counter value; or
the number of times for validity of the SN counter value.

The reuse can be understood as repeated use. When the SN counter value is recyclable or reusable, the SN counter value can be saved.

The validity duration of the SN counter value may be an absolute time, such as 10:00. The absolute time is used to indicate that the SN counter value is valid until the absolute time is reached.

The validity duration of the SN counter value may also be a time range, such as 9:00 to 9:30. The validity duration of the SN counter value may also be a time combination consisting of an absolute time and a time duration, such as 9:00+30 minutes, which is used to indicate a valid time range.

In practical applications, the MN may carry the first information through at least one bit. The MN may also configure the first information at different granularities. Based on this, in an embodiment, one piece of first information corresponds to one SN counter value; or one piece of first information corresponds to the SN counter value of one candidate PSCell and/or SCG; or one piece of first information corresponds to the SN counter value of all candidate PSCells and/or SCGs; or one piece of first information corresponds to the SN counter value of one SN.

The MN may configure the first information with the SN counter value as the granularity, or configure the first information with the candidate PSCell and/or SCG as the granularity, or configure the first information with the SN as the granularity.

When the MN configures the first information with the SN counter value as the granularity, one piece of first information corresponds to one SN counter value. In this case, the number of first information is the same as the number of configured SN counter values. The validity duration and/or the number of times for validity of the SN counter values indicated by different first information may be the same or different.

When the MN configures the first information with candidate PSCell and/or SCG as the granularity, one piece of first information corresponds to all SN counter values of one candidate PSCell and/or one candidate SCG. In this case, all SN counter values of a same candidate PSCell and/ or a same candidate SCG correspond to one piece of first information together. The number of first information is the same as the number of candidate PSCells and/or candidate SCGs.

When one piece of first information corresponds to all SN counter values of all candidate PSCells and/or SCGs, it means that the MN only needs to configure one piece of first information, and all SN counter values of all candidate PSCells and/or SCGs correspond to one piece of first information.

When the MN configures the first information with SN as the granularity, one piece of first information corresponds to all SN counter values of one SN. In this case, all SN counter values of all candidate PSCells and/or SCGs of the same SN correspond to one piece of first information. The number of first information is the same as the number of SNs.

The MN may explicitly or implicitly indicate the maximum number of times the UE is allowed to return to or access a same candidate PSCell and/or a same candidate SCG. Based on this, in an embodiment, the number or the cumulative number of SN counter values configured for each candidate PSCell and/or SCG is used to indicate the maximum number of times the UE is allowed to return to or access a same candidate PSCell and/or a same candidate SCG.

In the case that the protocol specifies the maximum number of times that a same candidate PSCell and/or a same candidate SCG is allowed to be returned or accessed, the MN may configure (reserve), for each candidate PSCell and/or SCG, a corresponding number of SN counter values or the SN counter value not exceeding the protocol-defined maximum, thereby explicitly indicating the maximum number of times that a same candidate PSCell and/or a same candidate SCG is allowed to be returned or accessed. For example, a same candidate PSCell is allowed to be returned up to 3 times, the MN may configure 4 SN counter values for the candidate PSCell in the RRC reconfiguration message. The maximum number of times allowed to return plus 1 is equal to the maximum number of times allowed to access.

In the case that the protocol does not specify the maximum number of times allowed to return to or access a same candidate PSCell and/or a same candidate SCG, the MN may also implicitly indicate the maximum number of times allowed to return to or access a same candidate PSCell and/or a same candidate SCG through the number or the cumulative number of SN counter values configured for each candidate PSCell and/or candidate SCG.

For example, the number of SN counter values configured for candidate PSCell 1/SCG 1 is 4, which is used to indicate that the maximum number of times allowed to return to PSCell 1 is 3, or to indicate that the maximum number of times allowed to access PSCell 1/SCG 1 is 4.

The cumulative number of SN counter values configured for each candidate PSCell and/or SCG is used to implicitly indicate the maximum number of times allowed to return to or access a same candidate PSCell and/or a same candidate SCG. The cumulative number of SN counter values can be determined by the number of configured SN counter values and the reusable count or the number of times for validity of each SN counter value. For example, if 2 SN counter values are configured for candidate PSCell 1/SCG 1, and each SN counter value can be reused twice, then the cumulative number of SN counter values of candidate PSCell 1/SCG 1 is 4, which is used to indicate that the maximum number of times allowed to access candidate PSCell 1/SCG 1 is 4, or the maximum number of times allowed to return to PSCell 1/SCG 1 is 3. For another example, if 2 SN counter values are configured for candidate PSCell 1/SCG 1, and the number of times for validity are 1 and 2 respectively, then the cumulative number of SN counter values of candidate PSCell 1/SCG 1 is 3, which is used to indicate that the maximum number of times allowed to access candidate PSCell 1/SCG 1 is 3, or the maximum number of times allowed to return to PSCell 1/SCG 1 is 2.

The MN may explicitly or implicitly indicate the maximum number of times the UE is allowed to return to or access a same SN. Based on this, in an embodiment, the number or the cumulative number of SN counter values configured for all candidate PSCells and/or SCGs of each SN is used to indicate the maximum number of times the UE is allowed to return to or access a same SN.

In the case that the protocol specifies the maximum number of times that returning to or accessing a same SN is allowed, the MN can configure a corresponding number or an SN counter value not exceeding the maximum number for each SN, thereby explicitly indicating the maximum number of times that returning to or accessing a same SN is allowed.

In the case that the protocol does not specify the maximum number of times allowed to return to or access a same SN, the MN may also implicitly indicate the maximum number of times allowed to return to or access a same SN through the number or the cumulative number of SN counter values configured for each SN.

The number of SN counter values configured for all candidate PSCells and/or SCGs of each SN is used to explicitly or implicitly indicate the maximum number of times that a return to or access to a same SN is allowed. The cumulative number of SN counter values configured for all candidate PSCells and/or SCGs of each SN is used to implicitly indicate the maximum number of times that a return to or access to a same SN is allowed.

The MN may explicitly or implicitly indicate the maximum number of times the UE is allowed to perform selective activation of the PSCell and/or the SCG. Based on this, in an embodiment, the number or the cumulative number of SN counter values configured for all candidate PSCells and/or SCGs is used to indicate the maximum number of times the selective activation of the PSCell and/or the SCG is allowed.

In the case that the protocol specifies the maximum number of times allowed to selectively activate the PSCell and/or the SCG, the MN can configure, for all candidate PSCells and/or SCGs, a corresponding number or a SN counter value not exceeding the protocol-defined maximum, thereby explicitly indicating the maximum number of times allowed to selectively activate the PSCell and/or the SCG. In the case that the protocol does not specify the maximum number of times allowed to selectively activate the PSCell and/or the SCG, the MN can also implicitly indicate the maximum number of times allowed to selectively activate the PSCell and/or the SCG by the number or the cumulative number of SN counter values configured for all candidate PSCells and/or SCGs.

The number of SN counter values configured for all candidate PSCells and/or SCGs is used to explicitly or implicitly indicate the maximum number of times allowed to selectively activate the PSCell and/or the SCG. The cumulative number of SN counter values configured for all candidate PSCells and/or SCGs is used to implicitly indicate the maximum number of times allowed to selectively activate the PSCell and/or the SCG.

The MN may directly configure a specific SN counter value or a range of SN counter values. Based on this, in an embodiment, the configured at least one SN counter value or at least one set of SN counter values is indicated by at least one of the followings:
at least one SN counter value;
a range of SN counter values and one or more increments (delta values);
one SN counter value, one variation range, and one or more increments; or
one SN counter value and one or more increments;
wherein the increment is an increment of the SN counter value.

The MN can directly configure a specific SN counter value, for example, configure at least one SN counter value, such as the SN counter value list configured in the RRC reconfiguration message is {1,2,3,5}, indicating that the available SN counter values are 1,2,3,5 respectively. The SN counter value is an integer. In this case, the MN is configured with 4 SN counter values.

The MN can also indicate multiple SN counter values by configuring the range of SN counter values and one or more increments. The increment can be understood as the increment between every two adjacent SN counter values, which is used to calculate the SN counter value and is an integer. Multiple increments can be understood as two or more than two increments. For example, the MN can directly configure the range of SN counter values to be 1 to 10 (inclusive) and an increment. In this case, the range of SN counter values configured by the MN is 1 to 10. If the increment is 1, then the MN has configured 10 SN counter values; if the increment is 2, then MN has configured 5 SN counter values. For another example, the range of SN counter values configured by the MN is 1 to 10 (inclusive), and the increments are 1 and 2. Then the UE may use different increments in sequence to calculate the SN counter value. The available SN counter values are 1, 2, 4, 5, 7, 8, and 10; the MN actually configures 7 SN counter values.

The MN can also indicate multiple SN counter values by configuring one SN counter value, one variation range, and one or more increments. For example, when the MN configures one SN counter value of 1, one variation range of 9, and one increment of 1. In this case, the range of the SN counter value configured by the MN is 1 to 10, and the increment is 1, so MN configures 10 SN counter values, and the difference between the maximum SN counter value and the minimum SN counter value is 9. For another example, when the MN configures one SN counter value of 1, one variation range of 9, and two increments of 1 and 2 respectively; the UE may use different increments in sequence to calculate the SN counter value, and the available SN counter values are 1, 2, 4, 5, 7, 8, and 10.

The MN can also indicate multiple SN counter values by configuring one SN counter value and one or more increments. For example, when the MN configures one SN counter value of 1 and one increment of 1, the UE uses 1 for the first SN counter value, 2 for the second SN counter value, and so on. For another example, when the MN configures one SN counter value of 1 and two increments of 1 and 2 respectively, the UE may use different increments in sequence to calculate the SN counter value. The first SN counter value would be 1, the second would be 2, the third would be 4, and the fourth would be 5; that is, each time the SN counter value is calculated, 1 or 2 is added to the most recent SN counter value in sequence.

In an embodiment, the multiple increments are used to indicate at least one of the followings:
different increments are used when the UE returns to or accesses a same candidate PSCell and/or a same candidate SCG again or for two consecutive times;
different increments are used when the UE performs selective activation of the PSCell and/or the SCG again or for two consecutive times;
different increments are used when the UE accesses the candidate PSCell and/or the candidate SCG again or for two consecutive times; or
different increments are used when the UE returns to or accesses a same SN again or for two consecutive times.

Each of the multiple different increments is used to calculate the SN counter value.

When the MN configures multiple increments for one candidate PSCell and/or one candidate SCG, the multiple increments are used to indicate that different increments are used when the UE returns to or accesses a same candidate PSCell and/or a same candidate SCG again or for two consecutive times.

When the MN configures multiple increments for the candidate PSCell and/or SCG, the multiple increments are used to indicate that different increments are used when the UE performs selective activation of the PSCell and/or the SCG again or for two consecutive times, or that different increments are used when the UE accesses the candidate PSCell and/or SCG again or for two consecutive times.

When the MN configures multiple increments for all candidate PSCells and/or SCGs of one SN, the multiple increments are used to indicate that different increments are used when the UE returns to or accesses a same SN again or for two consecutive times.

The MN may configure only one SN counter value of one candidate PSCell and/or one candidate SCG. Based on this, in an embodiment, in the case that the first information indicates that the SN counter value is recyclable or reusable, the only one SN counter value of one candidate PSCell and/or one candidate SCG is used to indicate that a same SN counter value is used when the UE returns to or accesses a same candidate PSCell and/or a same candidate SCG again or each time.

The MN can configure only one SN counter value of one SN. Based on this, in an embodiment, in the case that the first information indicates that the SN counter value is recyclable or reusable, only one SN counter value of all candidate PSCells and/or all candidate SCGs of one SN is used to indicate that a same SN counter value is used when the UE returns to or accesses a same SN again or each time.

The MN may configure only one SN counter value of all candidate PSCells and/or SCGs. Based on this, in an embodiment, in the case that the first information indicates that the SN counter value is recyclable or reusable, only one SN counter value of all candidate PSCells and/or SCGs is used to indicate at least one of the followings:
a same SN counter value is used when the UE performs selective activation of the PSCell and/or the SCG again or each time; or
a same SN counter value is used when the UE accesses the candidate PSCell and/or the candidate SCG again or each time.

In an embodiment, different SN counter values of one candidate PSCell and/or one candidate SCG are used to indicate that different SN counter values are used when the UE returns to or accesses a same candidate PSCell and/or a same candidate SCG again, each time, or for two consecutive times.

In the case that the MN configures at least two SN counter values (all SN counter values are different) for one candidate PSCell and/or one candidate SCG, different SN counter values of one candidate PSCell and/or one candidate SCG are used to indicate that different SN counter values are used when the UE returns to or accesses a same candidate PSCell and/or a same candidate SCG again or each time or for two consecutive times. When the RRC reconfiguration message does not include the first information or the first information indicates that the SN counter value is not recyclable or reusable, each SN counter value configured by the MN for a same candidate PSCell and/or a same candidate SCG is only allowed to be used once. That is, after all SN counter values configured by the MN for a same candidate PSCell and/or a same candidate SCG are used once, the UE is not allowed to access the candidate PSCell and/or the candidate SCG again, and the UE stops a procedure of selective activation of the PSCell and/or the SCG. When the first information indicates that the SN counter value is recyclable or reusable, each SN counter value configured by the MN for each candidate PSCell and/or SCG is recyclable or reusable. At least two SN counter values may be directly configured by the MN, or may be indicated by the SN counter value, and an increment and/or a variation range.

For example, the RRC reconfiguration message includes a list of SN counter values configured for candidate PSCell 1/SCG 1 as {1, 3, 4, 6}, and does not include the first information. The UE uses an SN counter value 1 when accessing PSCell 1/ SCG 1 for the first time, uses an SN counter value 3 when accessing PSCell 1/ SCG 1 for the second time, uses an SN counter value 4 when accessing PSCell 1/SCG 1 for the third time, and uses an SN counter value 6 when accessing PSCell 1/SCG 1 for the fourth time.

For another example, in the case that the MN configures two different SN counter values, 2 and 5, for the candidate PSCell 1/SCG 1, and the first information indicates that the two SN counter values are recyclable or reusable, the two SN counter values configured for the candidate PSCell 1/SCG 1 can be used to indicate: the UE uses the first SN counter value 2 when accessing the candidate PSCell 1/SCG 1 for the first time, uses the second SN counter value 5 when accessing the candidate PSCell 1/SCG 1 for the second time, uses the first SN counter value 2 when accessing the candidate PSCell 1/SCG 1 for the third time, uses the second SN counter value 5 when accessing the candidate PSCell 1/SCG 1 for the fourth time, and so on.

In an embodiment, different SN counter values of all candidate PSCells and/or SCGs of one SN are used to indicate that different SN counter values are used when the UE returns to or accesses a same SN again, each time, or for two consecutive times.

In the case that the MN configures at least two SN counter values for one SN (all SN counter values are different), the different SN counter values of all candidate PSCells and/or SCGs of one SN are used to indicate that different SN counter values are used when the UE returns to or accesses a same SN again, each time, or for two consecutive times. When the RRC reconfiguration message does not include the first information, or the first information indicates that the SN counter value is not recyclable or reusable, each SN counter value configured by the MN for a same SN is only allowed to be used once. That is, after all SN counter values configured by the MN for a same SN are used once, the UE is not allowed to access the SN again, or the UE will not evaluate or select the candidate PSCell and/or SCG of the SN during the cell group selective activation process. When the first information is used to indicate that the SN counter value is recyclable or reusable, the SN counter value that is recyclable or reusable can be determined based on the correspondence between the first information and the SN counter value. For example, when one piece of first information corresponds to the SN counter value of one SN, all SN counter values of that SN can be recyclable or reusable. For another example, when one piece of first information corresponds to one SN counter value, only the SN counter value that is recyclable or reusable indicated by the first information is recyclable or reusable.

In an embodiment, different SN counter values of all candidate PSCells and/or SCGs are used to indicate at least one of the followings:
different SN counter values are used when the UE performs selective activation of the PSCell and/or the SCG again or each time or for two consecutive times; or
different SN counter values are used when the UE accesses the candidate PSCell and/or the candidate SCG again, each time, or for two consecutive times.

In the case that the MN has configured at least two SN counter values (all SN counter values are different) for all candidate PSCells and/or SCGs, different SN counter values are used to indicate: different SN counter values are used when the UE performs selective activation of the PSCell and/or the SCG again or each time, or different SN counter values are used when the UE accesses the candidate PSCell and/or the candidate SCG again or each time. When the RRC reconfiguration message does not include the first information, or the first information indicates that the SN counter value is not recyclable or reusable, each SN counter value configured by the MN for all candidate PSCells and/or SCGs is only allowed to be used once, that is, after all SN counter values configured by the MN for all candidate PSCells and/or SCGs are used once, the UE is not allowed to access any candidate PSCell and/or SCG. When the first information is used to indicate that the SN counter value is recyclable or reusable, the SN counter value that is recyclable or reusable can be determined based on the correspondence between the first information and the SN counter value. For example, when one piece of first information corresponds to all SN counter values, all SN counter values is recyclable or reusable. For another example, when one piece of first information corresponds to one SN counter value, only the SN counter value that is recyclable or reusable indicated by the first information is recyclable or reusable.

In an embodiment, in the case that one candidate PSCell and/or SCG has only one SN counter value, or one SN has only one SN counter value, or there is only one SN counter value of all candidate PSCells and/or SCGs, the method further includes:
indicating an updated SN counter value to the UE in the case that the SN counter value is invalid, or the UE fails to access the SN by using the SN counter value.

The invalidation of the SN counter value may be determined by the MN or reported by the UE to the MN. The failure of the UE to access the SN by using the SN counter value may be notified by the SN to the MN or reported by the UE to the MN. The updated SN counter value indicated by the MN to the UE may correspond to a same candidate PSCell and/or a same candidate SCG as the invalid SN counter value or the SN counter value used by the UE, or it may correspond to a same SN.

In an embodiment, the method further includes: storing a used SN counter value and automatically updating the SN counter value.

The MN can store the SN counter value used by the UE and automatically update the SN counter value. The MN can automatically update the SN counter value according to a predefined update mechanism. For example, the standard protocol specifies that the SN counter value is incremented by 1 each time, the UE stores the SN counter value configured by the MN in an initial RRC reconfiguration message. Subsequently, each time the UE accesses the same candidate PSCell and/or the same candidate SCG, the SN counter value is automatically incremented by 1. The MN also automatically increments the most recently used SN counter value by 1 and derives the latest *K_{SN}* SN, which is then sent to the SN.

Correspondingly, the embodiments of the present disclosure further provide a communication method, performed by a User Equipment (UE). The UE includes a mobile phone, a tablet computer, a wearable device, etc. As shown in FIG. 2, the method includes:
step 201: receiving a Radio Resource Control (RRC) reconfiguration message sent by a Master Node (MN), wherein the RRC reconfiguration message includes at least one of the followings:
at least one Secondary Node (SN) counter value or at least one set of SN counter values configured for each candidate Primary Secondary Cell (PSCell) and/or each candidate Secondary Cell Group (SCG);
at least one SN counter value or at least one set of SN counter values configured for all candidate PSCells and/or all candidate SCGs of each SN; or
at least one SN counter value or at least one set of SN counter values configured for all candidate PSCells and/or all candidate SCGs.

In an embodiment, the number or the cumulative number of SN counter values configured for each candidate PSCell and/or each candidate SCG is used to indicate the maximum number of times allowed to return to or access a same candidate PSCell and/or a same candidate SCG.

In an embodiment, the number or the cumulative number of SN counter values configured for all candidate PSCells and/or all candidate SCGs of each SN is used to indicate the maximum number of times allowed to return to or access a same SN.

In an embodiment, the number or the cumulative number of SN counter values configured for all candidate PSCells and/or all candidate SCGs is used to indicate the maximum number of times allowed to selectively activate the PSCell and/or the SCG.

In an embodiment, the configured at least one SN counter value or at least one set of SN counter values is indicated by at least one of the followings:
at least one SN counter value;
a range of SN counter values and one or more increments;
one SN counter value, one variation range, and one or more increments; or
one SN counter value and one or more increments;
wherein the increment is an increment of the SN counter value.

In an embodiment, the multiple increments are used to indicate at least one of the followings:
different increments are used when the UE returns to or accesses a same candidate PSCell and/or a same candidate SCG again or for two consecutive times;
different increments are used when the UE performs consecutive selective activation of the SCG again or for two consecutive times;
different increments are used when the UE accesses the candidate PSCell or the candidate SCG again or for two consecutive times; or
different increments are used when the UE returns to or accesses a same SN again or for two consecutive times.

In an embodiment, in the case that there is no available SN counter value, the method further includes at least one of the followings:
no longer returning to, or accessing, or evaluating the candidate PSCell and/or SCG corresponding to the SN counter value;
no longer returning to, or accessing, or evaluating the SN corresponding to the SN counter value;
no longer returning to, or accessing, or evaluating all candidate PSCells and/or SCGs of the SN corresponding to the SN counter value;
deleting the configuration of the corresponding candidate PSCell and/or SCG;
deleting the configuration of all candidate PSCells and/or SCGs of the corresponding SN;
no longer returning to, or accessing, or evaluating all candidate PSCells and/or SCGs;
deleting the configuration of all candidate PSCells and/or SCGs of the corresponding SN;
stopping the procedure of selective activation of the PSCell and/or the SCG.

In the case that the SN counter value is based on the granularity of the candidate PSCell and/or SCG, the SN counter value corresponds to the candidate PSCell and/or SCG, and the UE may perform at least one of the followings:
no longer returning to, or accessing, or evaluating the candidate PSCell and/or SCG corresponding to the SN counter value;
deleting the configuration of the corresponding candidate PSCell and/or SCG; or
stopping the procedure of selective activation of the PSCell and/or the SCG.

In the case that the SN counter value is based on the SN granularity, the SN counter value corresponds to the SN, and the UE may perform at least one of the followings:
no longer returning to, or accessing, or evaluating the SN corresponding to the SN counter value;
no longer returning to, or accessing, or evaluating all candidate PSCells and/or SCGs of the SN corresponding to the SN counter value;
deleting the configuration of all candidate PSCells and/or SCGs of the corresponding SN; or
stopping the procedure of selective activation of the PSCell and/or the SCG.

In the case that the SN counter value is configured for all candidate PSCells and/or SCGs, the UE may perform at least one of the followings:
no longer returning to, or accessing, or evaluating all candidate PSCells and/or SCGs;
deleting the configuration of all candidate PSCells and/or SCGs; or
stopping the procedure of selective activation of the PSCell and/or the SCG.

In an embodiment, the RRC reconfiguration message further includes first information. The first information is used to indicate at least one of the followings:
whether the SN counter value is recyclable or reusable;
a validity duration of the SN counter value; or
the number of times for validity of the SN counter value.

In an embodiment, one piece of first information corresponds to one SN counter value; or one piece of first information corresponds to the SN counter value of one candidate PSCell and/or SCG; or one piece of first information corresponds to the SN counter values of all candidate PSCells and/or SCGs; or one piece of first information corresponds to the SN counter value of one SN.

After receiving the RRC reconfiguration message, the UE may determine the SN counter value used for performing the selective activation of the cell group based on the RRC reconfiguration message. Based on this, in an embodiment, the method further includes: determining the SN counter value to be used when performing at least one of the followings:
accessing or returning to a same SN;
accessing or returning to a same candidate PSCell and/or a same candidate SCG;
accessing a candidate PSCells and/or SCGs; or
selective activation of the PSCell and/or the SCG.

The UE may determine the SN counter value to be used based on the SN counter value configured in the RRC reconfiguration message. The UE may also determine the SN counter value to be used based on the SN counter value configured in the RRC reconfiguration message and first information.

For example, when the RRC reconfiguration message includes only one SN counter value and does not include the first information, there is only one available SN counter value. When the RRC reconfiguration message includes only one SN counter value and includes the first information, the available SN counter value and the number of times for validity and/or validity duration of the SN counter value are determined according to the content indicated by the first information.

For another example, when the RRC reconfiguration message includes at least two SN counter values and does not include the first information, the number of available SN counter values is at least two, and different SN counter values are used in sequence each time when the UE performs the above operation. For example, even if the UE returns to the previously selected candidate PSCell/SCG, it uses the next SN counter value in sequence. When the RRC reconfiguration message includes at least two SN counter values and includes the first information, the available SN counter value and the number of times for validity and/or validity duration of the SN counter value are determined based on the at least two configured SN counter values and the content indicated by the first information.

The at least two SN counter values included in the RRC reconfiguration message are obtained by at least one of the followings:
directly reading from the RRC reconfiguration message;
determining based on a range and one or more increments of the SN counter value included in the RRC reconfiguration message;
determining based on one SN counter value, one variation range, and one or more increments included in the RRC reconfiguration message; or
determining based on one SN counter value and one or more increments.

For example, the UE can determine at least two SN counter values based on the range of SN counter values and one or more increments. When the range of SN counter values configured by the MN is from 1 to 10 (inclusive) and the increment is 2, the SN counter values determined by the UE are 1, 3, 5, 7, and 9.

The UE can determine at least two SN counter values based on one SN counter value, one variation range, and one or more increments included in the RRC reconfiguration message. When the MN configures one SN counter value of 1, one variation range of 9, and two increments of 1 and 2 respectively, the SN counter values determined by the UE are 1, 2, 4, 5, 7, 8, and 10.

The UE can determine at least two SN counter values based on one SN counter value and one or more increments. When the RRC reconfiguration message includes at least two increments, different increments are used for adjacent or successive calculations of SN counter values. For example, the RRC reconfiguration message includes one SN counter value, a first increment, and a second increment. In this case, the SN counter value included in the RRC reconfiguration message is used as the first SN counter value; the UE uses the first SN counter value and the first increment to calculate or derive the second SN counter value; and then uses the second SN counter value and the second increment to calculate the third SN counter value.

It should be noted that the process of the UE accessing the SN through the obtained SN counter value is as follows:
the UE obtains the SN counter value, and based on the *K_{MN}* and SN counter value, generates the *K_{SN}* according to a predefined algorithm. Then, based on the *K_{SN},* the UE determines the RRC key *K_{RRC}* and User Plane (UP) key *K_{UP}.* The configuration of the candidate PSCell and/or SCG in the RRC reconfiguration message is the necessary information required for accessing the candidate PSCell and/or SCG. Based on the configuration of the candidate PSCell and/or SCG in the RRC reconfiguration message, the UE accesses the candidate PSCell or SCG through a random access procedure. After the UE establishes an RRC connection with the SN, an RRC signaling and user plane data exchanged between the UE and the SN are encrypted by using *K_{RRC}and K_{UP},* respectively.

In the case that the RRC reconfiguration message further includes the first information, in an embodiment, the method further includes: in the case that the RRC reconfiguration message includes only one SN counter value, and the first information indicates that the SN counter value is recyclable or reusable, performing at least one of the followings:
a same SN counter value is used each time when returning to or accessing a same candidate PSCell or a same candidate SCG;
a same SN counter value is used each time when performing selective activation of the PSCell or the SCG;
a same SN counter value is used each time when accessing the candidate PSCell or SCG; or
a same SN counter value is used each time when returning to or accessing a same SN.

In the case that the RRC reconfiguration message further includes the first information, in an embodiment, the method further includes at least one of the followings:
in the case that there is only one SN counter value of one candidate PSCell and/or SCG, and the first information indicates that the SN counter value is recyclable or reusable, a same SN counter value is used each time when returning to or accessing a same candidate PSCell or a same candidate SCG;
in the case that there is only one SN counter value of all candidate PSCells and/or SCGs of one SN, and the first information indicates that the SN counter value is recyclable or reusable, a same SN counter value is used each time when returning to or accessing a same SN; or
in the case that there is only one SN counter value of all candidate PSCells and/or SCGs, and the first information indicates that the SN counter value is recyclable or reusable, a same SN counter value is used each time when performing selective activation of the PSCell or the SCG, or a same SN counter value is used each time when accessing the candidate PSCell or the candidate SCG.

In an embodiment, the method further includes at least one of the followings:
in the case that one candidate PSCell and/or one candidate SCG has different SN counter values, different SN counter values are used in sequence when returning to or accessing a same candidate PSCell or a same candidate SCG again or each time or for two consecutive times;
in the case that all candidate PSCells and/or SCGs have different SN counter values, different SN counter values are used in sequence when performing selective activation of the PSCell or the SCG again or each time or for two consecutive times, or different SN counter values are used in sequence when accessing the candidate PSCell or the candidate SCG again or each time or for two consecutive times; or
in the case that one SN has different SN counter values, different SN counter values are used in sequence when returning to or accessing a same SN again or each time or for two consecutive times.

In the case that the RRC reconfiguration message does not include the first information, or the first information is used to indicate that the SN counter value is not recyclable or reusable, different SN counter values are used each time or again when the UE performs the corresponding operation. In the case that the RRC reconfiguration message further includes the first information, and the first information is used to indicate that the SN counter value is recyclable or reusable, at least one of the followings is performed:
when returning to or accessing a same candidate PSCell or a same candidate SCG again or for two consecutive times, different SN counter values of the candidate PSCell and/or SCG are used cyclically in sequence (for example, different SN counter values 2 and 5 are used cyclically);
when performing selective activation of the PSCell or the SCG again or for two consecutive times, different SN counter values are used cyclically in sequence; or, when accessing a candidate PSCell or SCG again or for two consecutive times, different SN counter values are used cyclically in sequence; or
when returning to or accessing a same SN again or for two consecutive times, different SN counter values are used cyclically in sequence.

In an embodiment, in the case that a validity duration and/or the number of times for validity of the SN counter value indicated by the first information is exceeded, the method further includes at least one of the followings:
deleting or no longer using the SN counter value;
no longer returning to, or accessing, or evaluating the candidate PSCell and/or SCG corresponding to the SN counter value;
no longer returning to, or accessing, or evaluating the SN corresponding to the SN counter value;
no longer returning to, or accessing, or evaluating all candidate PSCells and/or SCGs of the SN corresponding to the SN counter value;
deleting the configuration of the corresponding candidate PSCell and/or SCG;
deleting the configuration of all candidate PSCells and/or SCGs of the corresponding SN;
no longer returning to, or accessing, or evaluating all candidate PSCells and/or SCGs;
deleting the configuration of all candidate PSCells and/or SCGs; or
stopping the procedure of selective activation of the PSCell and/or the SCG.

In the case that the validity duration and/or the number of times for validity of the SN counter value indicated by the first information is exceeded, the corresponding SN counter value becomes invalid. Exceeding the validity duration of the SN counter value indicated by the first information means that the current time exceeds or is not within the validity duration of the SN counter value indicated by the first information; exceeding the number of times for validity of the SN counter value indicated by the first information means that the number of times for validity of the SN counter value is used is greater than or equal to the number of times for validity of the SN counter value indicated by the first information.

Different SN counter values may correspond to different validity duration and/or the number of times for validity. When one SN counter value becomes invalid, the UE will no longer use this SN counter value. When all SN counter values of the candidate PSCell and/or SCG become invalid, the UE will not access or evaluate the corresponding candidate PSCell and/or SCG. When all SN counter values of all candidate PSCells and/or SCGs become invalid, there is no available SN counter value, and the UE will release the configuration and stop the procedure of selective activation of the PSCell or the SCG.

In the case that the validity duration and/or the number of times for validity of SN counter values is exceeded, and the SN counter value is configured with the candidate PSCell and/or SCG as the granularity, the SN counter value corresponds to the candidate PSCell and/or SCG, and the UE can perform at least one of the followings:
deleting the configuration of the corresponding candidate PSCell and/or SCG;
deleting or no longer using the SN counter value;
no longer returning, or accessing, or evaluating the candidate PSCell and/or SCG corresponding to the SN counter value; or
stopping the procedure of selective activation of the PSCell and/or the SCG.

In the case that the validity duration and/or the number of times for validity of the SN counter value is exceeded and the SN counter value is configured with the SN as the granularity, the SN counter value corresponds to the SN, and the UE may perform at least one of the followings:
deleting or no longer using the SN counter value;
deleting the configuration of all candidate PSCells and/or SCGs of the corresponding SN;
no longer returning to, or accessing, or evaluating the SN corresponding to the SN counter value;
no longer returning to, or accessing, or evaluating all candidate PSCells and/or SCGs of the SN corresponding to the SN counter value; or
stopping the procedure of selective activation of the PSCell and/or the SCG.

In the case that the validity duration or the number of times for validity of SN counter value is exceeded and the SN count is configured for all candidate PSCells and/or SCGs, the UE may perform at least one of the followings:
deleting or no longer using the SN counter value;
no longer returning, or accessing, or evaluating all candidate PSCells and/or SCGs;
deleting the configuration of all candidate PSCells and/or SCGs; or
stopping the procedure of selective activation of the PSCell and/or the SCG.

In an embodiment, in the case that there is only one SN counter value of one candidate PSCell and/or SCG, or only one SN counter value of one SN, or only one SN counter value of all candidate PSCells and/or SCGs, the method further includes:
receiving an updated SN counter value indicated by the MN in the case that the SN counter value is invalid, or the UE fails to access the SN by using the SN counter value.

For example, in the case that there is only one SN counter value of one candidate PSCell and/or SCG, when the UE accesses the candidate PSCell and/or SCG for the first time or again, it uses the only one SN counter value corresponding to the candidate PSCell and/or SCG in the RRC reconfiguration message for access. When the SN counter value is valid, the UE can successfully access the candidate PSCell and/or SCG. When the SN counter value is invalid, the UE fails to access and reports to the MN that the SN counter value is invalid; the MN then indicates an updated SN counter value to the UE; the UE receives the updated SN counter value indicated by the MN.

When the SN decryption corresponding to the candidate PSCell and/or SCG fails, the SN responds to the UE that it rejects access to the candidate PSCell and/or SCG. The UE reports to the MN that the UE failed to access the SN by using the SN counter value, and the MN indicates an updated SN counter value to the UE. The UE receives the updated SN counter value indicated by the MN.

It should be noted that the updated SN counter value indicated by the MN to the UE may correspond to a same candidate PSCell and/or a same candidate SCG as the invalid SN counter value or the SN counter value used by the UE, or it may correspond to a same SN, or all candidate PSCells and/or SCGs.

To improve the probability of successfully accessing the SN, in an embodiment, the method further includes: using a second SN counter value to access a first SN in the case that at least one of the followings is met:
the first SN counter value is invalid;
accessing to the first SN by using the first SN counter value fails; or
the first SN rejects to be accessed;
wherein the first SN counter value and the second SN counter value are both SN counter values for the first SN in the RRC reconfiguration message.

The second SN counter value is different from the first SN counter value, and the number of the second SN counter values may be one or at least two.

For example, in the case that the MN configures the first SN counter value and the second SN counter value for the candidate PSCell and/or SCG of the first SN, the UE uses the first SN counter value to successfully access the corresponding candidate PSCell and/or SCG when accessing the candidate PSCell and/or SCG of the first SN for the first time.

When the UE accesses the candidate PSCell and/or SCG of the first SN for the second time, it first uses the first SN counter value for access. When the first SN counter value is still valid, the UE can successfully access the candidate PSCell and/or SCG of the first SN. When the first SN counter value is invalid, or access to the first SN by using the first SN counter value fails, the UE uses the second SN counter value to access the first SN. When the first SN decryption fails and the UE is denied access, the UE uses the second SN counter value to access the first SN.

In an embodiment, the method further includes: storing a used SN counter value and automatically updating the SN counter value.

The UE and the MN automatically update the unused SN counter value according to a same update mechanism.

The embodiments of the present disclosure are described below in conjunction with application examples.

Application Example 1: a Master Node (MN) configures a separate Secondary Node (SN) counter value for each candidate Primary Secondary Cell (PSCell) and/or Secondary Cell Group (SCG).

Step 1: the MN sends a Radio Resource Control (RRC) reconfiguration message to a User Equipment (UE). The RRC reconfiguration message includes at least one SN counter value or at least one set of SN counter values configured for each candidate PSCell and/or SCG. A signaling structure of the RRC reconfiguration message is as follows:
RRC Reconfiguration:
Conditional PSCell configuration:

```
         { candidate PSCell/SCG 1, SN counter value, other configuration}
         { candidate PSCell/SCG 2, SN counter value, other configuration}
        ...
         {candidate PSCell/SCG N, SN counter value, other configuration}
 
```

In practical applications, the following enhancements are made to the SN counter value in the RRC reconfiguration message.

Option 1: the protocol specifies the maximum number of times that the same candidate PSCell and/or the same candidate SCG is allowed to be returned or accessed. The MN configures, for each candidate PSCell and/or SCG, a corresponding number of SN counter values or the SN counter value not exceeding the protocol-defined maximum. For example, the protocol specifies that the maximum number of times that the MN is allowed to return to a same candidate PSCell and/or a same candidate SCG is 3. The MN configures 4 SN counter values for the corresponding candidate PSCell and/or SCG in an initial RRC reconfiguration message.

Option 2: the protocol does not specify the maximum number of times that the UE is allowed to return to or access a same candidate PSCell and/or a same candidate SCG. The MN implicitly indicates the maximum number of times that the UE is allowed to return to or access a same candidate PSCell and/or a same candidate SCG through the number or the cumulative number of SN counter values configured for each candidate PSCell and/or SCG. For example, the MN configures 3 SN counter values for candidate PSCell 1/SCG 1, indicating that the UE can access the candidate PSCell 1/SCG 1 three times or return to candidate PSCell 1/SCG 1 twice. The number or the cumulative number of SN counter values configured for each candidate PSCell and/or SCG is used to indicate the maximum number of times that the UE is allowed to return to or access a same candidate PSCell and/or a same candidate SCG.

Option 3: for the SN counter value configured for each candidate PSCell and/or SCG, the RRC reconfiguration message may include a specific SN counter value. For example, the RRC reconfiguration message may include at least one SN counter value. The RRC reconfiguration message may also include one SN counter value, one variation range, and one or more increments. The RRC reconfiguration message may also include one SN counter value and one or more increments, wherein the increment is an increment of the SN counter value. The increment is an integer.

In the case that the first information indicates that the SN counter value is recyclable or reusable, only one SN counter value of one candidate PSCell and/or one candidate SCG is used to indicate that a same SN counter value is used when the UE returns to or accesses a same candidate PSCell and/or a same candidate SCG again or each time.

Different SN counter values of one candidate PSCell and/or one candidate SCG are used to indicate that different SN counter values are used when the UE returns to or accesses a same candidate PSCell and/or a same candidate SCG again or each time or for two consecutive times.

In the case that the RRC reconfiguration message includes multiple different increments; the multiple different increments are used to indicate: different increments are used when the UE returns to or accesses a same candidate PSCell and/or a same candidate SCG again or for two consecutive times.

For example, the MN configures an initial SN counter value of 0 and two increments for a same candidate PSCell and/or a same candidate SCG, and the two increments are 1 and 2 respectively. In this case, the two increments are used to indicate: when the UE accesses a same candidate PSCell and/or a same candidate SCG for the first time, the initial SN counter value of 0 and the increment of 1 are used to calculate the SN counter value 1, when accessing a same candidate PSCell and/or a same candidate SCG for the second time, the SN counter value 1 and the increment of 2 are used to calculate the SN counter value 3, when accessing a same candidate PSCell and/or a same candidate SCG for the third time, the SN counter value 3 and the increment of 1 are used to calculate the SN counter value 4, and so on.

For another example, the MN configures an initial SN counter value of 1 and two increments for a same candidate PSCell and/or a same candidate SCG, and the two increments are 1 and 2 respectively. In this case, the two increments are used to indicate: the UE uses the initial SN counter value 1 when accessing a same candidate PSCell and/or a same candidate SCG for the first time, uses the SN counter value 1 and increment 1 to calculate the SN counter value 2 when accessing a same candidate PSCell and/or a same candidate SCG for the second time, uses the SN counter value 2 and increment 2 to calculate the SN counter value 4 when accessing a same candidate PSCell and/or a same candidate SCG for the second time, uses the SN counter value 4 and increment 1 to calculate the SN counter value 5 when accessing a same candidate PSCell and/or a same candidate SCG for the third time, and so on.

Option 4: the MN may also carry the first information through at least one bit, and the first information is used to indicate: whether the SN counter value configured by the MN for the candidate PSCell and/or SCG is recyclable or reusable, and the validity duration and/or the number of times for validity of the SN counter value. One piece of first information corresponds to one SN counter value; or one piece of first information corresponds to the SN counter value of one candidate PSCell and/or one candidate SCG.

For example, when the MN configures two different SN counter values for the candidate PSCell 1/SCG 1, and the first information indicates that the two SN counter values are recyclable or reusable, the UE uses the first SN counter value when accessing the candidate PSCell 1/SCG 1 for the first time, uses the second SN counter value when accessing the candidate PSCell 1/SCG 1 for the second time, uses the first SN counter value when accessing the candidate PSCell 1/SCG 1 for the third time, uses the second SN counter value when accessing the candidate PSCell 1/SCG 1 for the fourth time, and so on. In this way, the SN counter value can be saved.

Option 5: in the case that the MN is configured with at least two different SN counter values, when the UE returns to a certain candidate PSCell and/or SCG, it first uses the SN counter value used when accessing the corresponding candidate PSCell and/or SCG for the first time. In the case that the SN counter value is still valid, the UE can successfully access the corresponding candidate PSCell and/or SCG. In the case that the SN counter value is invalid, the MN indicates the updated SN counter value to the UE, or in the case that the SN decryption fails and the UE is denied to access, the UE uses the second SN counter value to access the corresponding candidate PSCell and/or SCG.

When there is only one SN counter value of one candidate PSCell and/or one candidate SCG, in the case that the SN counter value is invalid, or the UE fails to access the SN by using the SN counter value, an updated SN counter value is indicated to the UE.

Option 6: both the MN and the UE store the used SN counter value and automatically update the SN counter value. The MN and the UE align the update mechanism of the SN counter value.

Step 2: the UE receives the RRC reconfiguration message sent by the MN.

In an embodiment, the UE determines, based on the received RRC reconfiguration message, the SN counter value to be used when accessing or returning to a same candidate PSCell and/or a same candidate SCG.

In an embodiment, in the case that the RRC reconfiguration message does not include the first information and there is no available SN counter value, the method further includes at least one of the followings:
no longer returning to, or accessing, or evaluating the candidate PSCell and/or SCG corresponding to the SN counter value;
deleting the configuration of the corresponding candidate PSCell and/or SCG; or
stopping the procedure of selective activation of the PSCell and/or the SCG.

In an embodiment, in the case that there is only one SN counter value of one candidate PSCell and/or SCG and the first information indicates that the SN counter value is recyclable or reusable, a same SN counter value is used each time when the UE returns to or accesses a same candidate PSCell and/or a same candidate SCG.

In an embodiment, in the case that one candidate PSCell and/or SCG has different SN counter values, different SN counter values are used in sequence when the UE returns to or accesses a same candidate PSCell or a same candidate SCG again or each time or for two consecutive times.

In an embodiment, in the case that the validity duration or the number of times for validity of the SN counter value indicated by the first information is exceeded, the UE further performs at least one of the followings:
deleting or no longer using the SN counter value;
no longer returning to, or accessing, or evaluating the candidate PSCell and/or the candidate SCG corresponding to the SN counter value;
deleting the configuration of the corresponding candidate PSCell and/or SCG; or
stopping the procedure of selective activation of the PSCell and/or the SCG.

In an embodiment, in the case that there is only one SN counter value of one candidate PSCell and/or SCG, the UE may also receive an updated SN counter value indicated by the MN in the case that the SN counter value is invalid or the UE fails to access the SN by using the SN counter value.

In an embodiment, the UE may also use the second SN counter value to access the first SN in the case that at least one of the followings is met:
the first SN counter value is invalid;
accessing to the first SN by using the first SN counter value fails; or
the first SN rejects to be accessed;
wherein the first SN counter value and the second SN counter value are both SN counter values for the first SN in the RRC reconfiguration message.

Application Example 2: a Master Node (MN) configures a same Secondary Node (SN) counter value for all candidate PSCells and/or SCGs.

Step 1: the MN sends a Radio Resource Control (RRC) reconfiguration message to a User Equipment (UE); the RRC reconfiguration message includes at least one SN counter value or at least one set of SN counter values configured for all candidate PSCells and/or SCGs. A signaling structure of the RRC reconfiguration message is as follows:
RRC Reconfiguration:
Conditional PSCell configuration:

```
        SN counter value
         { candidate PSCell 1, other configuration}
         { candidate PSCell 2, other configuration}
        ...
         { candidate PSCell N, other configuration}
```

The configured at least one SN counter value or at least one set of SN counter values is indicated by at least one of the followings:
at least one SN counter value;
a range of SN counter values and one or more increments;
one SN counter value, one variation range, and one or more increments; or
one SN counter value and one or more increments;
wherein the increment is an increment of the SN counter value.

In practical applications, the following enhancements are made to the SN counter value in the RRC reconfiguration message.

Option 1: the protocol specifies the maximum number of times allowed to selectively activate the PSCell and/or the SCG. The MN configures, for all candidate PSCells and/or SCGs, a corresponding number of SN counter values or the SN counter value not exceeding the protocol-defined maximum. For example, the protocol specifies that the maximum number of times allowed to selectively activate the PSCell and/or the SCG is 3. The MN configures 4 SN counter values for all candidate PSCells and/or SCGs in an initial RRC reconfiguration message.

Option 2: the protocol does not specify the maximum number of times allowed to selectively activate the PSCell and/or the SCG. The MN implicitly indicates the maximum number of times allowed to selectively activate the PSCell and/or the SCG through the number or the cumulative number of configured SN counter values. For example, the MN configures 3 SN counter values for all candidate PSCells, indicating that the maximum number of times the UE is allowed to perform selective activation of the PSCell and/or the SCG is 3. The number or the cumulative number of SN counter values configured for all candidate PSCells and/or SCGs is used to indicate the maximum number of times allowed to selectively activate the PSCell and/or the SCG.

Option 3: for the SN counter values configured for all candidate PSCells and/or SCGs, the RRC reconfiguration message may include a specific SN counter value. When the RRC reconfiguration message includes at least two different SN counter values, it is used to indicate that different SN counter values are used in sequence each time when the UE performs selective activation of the cell group; even if the UE returns to the previously selected candidate PSCell and/or SCG, it uses the next SN counter value in sequence. When there is no available SN counter value, the UE releases the configuration and stops the selective activation of the cell group.

When there is only one SN counter value of all candidate PSCells and/or SCGs, in the case that the SN counter value is invalid, or the UE fails to access the SN by using the SN counter value, the updated SN counter value is indicated to the UE.

In the case that the first information indicates that the SN counter value is recyclable or reusable, the only one SN counter value of all candidate PSCells and/or SCGs is used to indicate at least one of the followings:
a same SN counter value is used when the UE performs selective activation of the PSCell and/or the SCG again or each time; or
a same SN counter value is used when the UE accesses the candidate PSCell and/or the candidate SCG again or each time.

In an embodiment, different SN counter values of all candidate PSCells and/or SCGs are used to indicate one of the followings:
different SN counter values are used when the UE performs selective activation of the PSCell and/or the SCG again or each time or for two consecutive times; or
different SN counter values are used when the UE accesses the candidate PSCell and/or the candidate SCG again, each time, or for two consecutive times.

In an embodiment, in the case that the RRC reconfiguration message includes multiple different increments, the multiple different increments are used to indicate at least one of the followings:
different increments are used when the UE returns to or accesses a same candidate PSCell and/or a same candidate SCG again or for two consecutive times;
different increments are used when the UE performs selective activation of the PSCell and/or the SCG again or for two consecutive times; or
different increments are used when the UE accesses the candidate PSCell and/or SCG again or for two consecutive times.

It should be noted that for the method of calculating the SN counter value by using different increments, it may refer to the relevant description in Example 1; this will not be elaborated again here.

Option 4: for at least two SN counter values configured for all candidate PSCells and/or SCGs, the RRC reconfiguration message may include one SN counter value and one or more increments (delta values).

Option 5: for at least two SN counter values configured for all candidate PSCells and/or SCGs, the RRC reconfiguration message may include a range of SN counter values and one or more increments, or the RRC reconfiguration message may include one SN counter value, one variation range, and one or more increments.

For example, the range of the SN counter value is 1-5 (inclusive), and the increment is 1. The configured at least two SN counter values can be used to indicate that different SN counter values are used in sequence each time when the UE performs selective activation of the cell group. For example, 1 is used for the first time, 2 is used for the second time, and so on.

Option 6: the MN configures SN counter values for all candidate PSCells and/or SCGs, and may also configure first information, which is carried through at least one bit. The first information is used to indicate whether the SN counter values configured by the MN for all candidate PSCells and/or SCGs is recyclable or reusable, and the validity duration and/or the number of times for validity of the SN counter values. One piece of first information corresponds to the SN counter values of all candidate PSCells and/or SCGs.

For example, when the MN configures two different SN counter values for all candidate PSCells and/or SCGs, and the first information indicates that the two SN counter values are recyclable or reusable, the RRC reconfiguration message can indicate: the UE uses the first SN counter value when performing selective activation of the cell group for the first time, uses the second SN counter value when performing selective activation of the cell group for the second time, uses the first SN counter value when performing selective activation of the cell group for the third time, uses the second SN counter value when performing selective activation of the cell group for the fourth time, and so on. In this way, SN counter values can be saved.

Option 7: both the MN and the UE store the used SN counter values and automatically update the SN counter values. The MN and the UE align the update mechanism of the SN counter value.

Step 2: the UE receives the RRC reconfiguration message sent by the MN.

In an embodiment, the UE determines, based on the received RRC reconfiguration message, an SN counter value to be used when performing at least one of the followings:
accessing or returning to a same candidate PSCell and/or a same candidate SCG;
accessing the candidate PSCell and/or SCG; or
selective activation of the PSCell and/or the SCG.

In an embodiment, in the case that the RRC reconfiguration message does not include the first information and there is no available SN counter value, the method further includes at least one of the followings:
no longer returning to, or accessing, or evaluating all candidate PSCells and/or SCGs;
deleting the configuration of all candidate PSCells and/or SCGs; or
stopping the procedure of selective activation of the PSCell and/or the SCG.

In an embodiment, in the case that there is only one SN counter value of all candidate PSCells and/or SCGs, and the first information indicates that the SN counter value is recyclable or reusable, the UE performs at least one of the followings:
a same SN counter value is used each time when performing selective activation of the PSCell or the SCG; or
a same SN counter value is used each time when accessing the candidate PSCell or SCG.

In an embodiment, in the case that all candidate PSCells and/or SCGs have different SN counter values, the UE performs at least one of the followings:
different SN counter values are used in sequence when performing selective activation of the PSCell or the SCG again or each time or for two consecutive times; or
different SN counter values are used in sequence when accessing the candidate PSCell or SCG again or each time or for two consecutive times.

In an embodiment, in the case that the validity duration and/or the number of times for validity of the SN counter value indicated by the first information is exceeded, the UE further performs at least one of the followings:
deleting or no longer using the SN counter value;
no longer returning to, or accessing, or evaluating the candidate PSCell and/or SCG corresponding to the SN counter value;
no longer returning to, or accessing, or evaluating all candidate PSCells and/or SCGs;
deleting the configuration of all candidate PSCells and/or SCGs; or
stopping the procedure of selective activation of the PSCell and/or the SCG.

In an embodiment, in the case that there is only one SN counter value of all candidate PSCells and/or SCGs, the UE may also receive an updated SN counter value indicated by the MN in the case that the SN counter value is invalid or the UE fails to access the SN by using the SN counter value.

In an embodiment, the UE may also use the second SN counter value to access the first SN in the case that at least one of the followings is met:
the first SN counter value is invalid;
accessing to the first SN by using the first SN counter value fails; or
the first SN rejects to be accessed;
wherein the first SN counter value and the second SN counter value are both SN counter values for the first SN in the RRC reconfiguration message.

Application Example 3: a Master Node (MN) configures a same Secondary Node (SN) counter value for all candidate PSCells and/or SCGs of each SN.

Step 1: the MN sends a Radio Resource Control (RRC) reconfiguration message to a User Equipment (UE). The RRC reconfiguration message includes at least one SN counter value or at least one set of SN counter values configured for all candidate PSCells and/or SCGs of each SN. A signaling structure of the RRC reconfiguration message is as follows:

```
RRC Reconfiguration:
        Conditional PSCell configuration:
         {
        SN1{
        SN counter value
         { candidate PSCell 1, other configuration}
         { candidate PSCell 2, other configuration }}
        SN2{
        SN counter value
         {candidate PSCell 3, other configuration}
        ...
         { candidate PSCell N, other configuration }}
         }
```

In practical applications, the following enhancements are made to the SN counter value in the RRC reconfiguration message.

Option 1: the protocol specifies the maximum number of times that the MN is allowed to return to or access a same SN. The MN configures, for each SN, a corresponding number of SN counter values or the SN counter value not exceeding the protocol-defined maximum. For example, the protocol specifies that the maximum number of times that the MN is allowed to return to a same SN is 3. The MN configures 4 SN counter values for the corresponding SN in an initial RRC reconfiguration message.

Option 2: the protocol does not specify the maximum number of times that a UE is allowed to return to or access a same SN. The MN implicitly indicates the maximum number of times that a UE is allowed to return to or access a same SN through the number or the cumulative number of SN counter values configured for the SN. For example, the MN configures 3 SN counter values for the SN1, indicating that the UE can access the SN1 three times or return to the SN1 twice. The number or the cumulative number of SN counter values configured for each SN is used to indicate the maximum number of times that a UE is allowed to return to or access a same SN.

Option 3: for the SN counter value configured for each SN, the RRC reconfiguration message may include a specific SN counter value, for example, at least one SN counter value. The RRC reconfiguration message may also include one SN counter value, one variation range, and one or more increments. The RRC reconfiguration message may also include one SN counter value and one or more increments, wherein the increment is an increment of the SN counter value, and the increment is an integer.

In the case that the first information indicates that the SN counter value is recyclable or reusable, the only SN counter value configured for all candidate PSCells and/or SCGs of one SN is used to indicate that a same SN counter value is used when the UE returns to or accesses a same SN again or each time.

Different SN counter values of all candidate PSCells and/or SCGs of one SN are used to indicate that different SN counter values are used when the UE returns to or accesses a same SN again, each time, or for two consecutive times.

In the case that the RRC reconfiguration message includes multiple different increments, the multiple different increments are used to indicate that different increments are used when the UE returns to or accesses a same SN again or for two consecutive times.

It should be noted that for the method of calculating the SN counter value by using different increments, it may refer to the relevant description in Example 1, which will not be elaborated again here.

Option 4: the MN may also carry first information through at least one bit, the first information is used to indicate: whether the SN counter value configured by the MN for the candidate PSCell and/or SCG is recyclable or reusable, the validity duration and/or the number of times for validity of the SN counter value. One piece of first information corresponds to the SN counter value of one SN.

For example, when the MN configures two different SN counter values for the candidate SN1, and the first information indicates that the two SN counter values are recyclable or reusable, the RRC reconfiguration message can indicate: the UE uses the first SN counter value when accessing SN1 for the first time, uses the second SN counter value when accessing SN1 for the second time, uses the first SN counter value when accessing SN1 for the third time, uses the second SN counter value when accessing SN1 for the fourth time, and so on. In this way, the SN counter values can be saved.

Option 5: both the MN and the UE store the used SN counter values and automatically update the SN counter values. The MN and the UE align the update mechanism of the SN counter value.

Step 2: the UE receives the RRC reconfiguration message sent by the MN.

In an embodiment, the UE determines, based on the received RRC reconfiguration message, the SN counter value to be used when accessing or returning to a same SN.

In an embodiment, in the case that the RRC reconfiguration message does not include the first information and there is no available SN counter value, the method further includes at least one of the followings:
no longer returning to, or accessing, or evaluating the SN corresponding to the SN counter value;
no longer returning to, or accessing, or evaluating all candidate PSCells and/or all candidate SCGs of the SN corresponding to the SN counter value;
deleting the configuration of all candidate PSCells and/or SCGs of the corresponding SN; or
stopping the procedure of selective activation of the PSCell and/or the SCG.

In an embodiment, in the case that there is only one SN counter value of all candidate PSCells and/or SCGs of one SN, and the first information indicates that the SN counter value is recyclable or reusable, a same SN counter value is used each time when returning to or accessing a same SN.

In an embodiment, in the case that one candidate PSCell and/or SCG has different SN counter values, different SN counter values are used in sequence when the UE returns to or accesses a same candidate PSCell or a same candidate SCG again or each time or for two consecutive times.

In an embodiment, in the case that the validity duration or the number of times for validity of the SN counter value indicated by the first information is exceeded, the UE further performs at least one of the followings:
deleting or no longer using the SN counter value;
deleting the configuration of all candidate PSCells and/or SCGs of the corresponding SN;
no longer returning to, or accessing, or evaluating the SN corresponding to the SN counter value;
no longer returning to, or accessing, or evaluating all candidate PSCells and/or SCGs of the SN corresponding to the SN counter value; or
stopping the procedure of selective activation of the PSCell and/or the SCG.

In an embodiment, the UE may also use the second SN counter value to access the first SN in the case that at least one of the followings is met:
the first SN counter value is invalid;
accessing to the first SN by using the first SN counter value fails; or
the first SN rejects to be accessed;
wherein the first SN counter value and the second SN counter value are both SN counter values for the first SN in the RRC reconfiguration message.

In the communication method and apparatus, the network device, the user equipment and the storage medium provided in the present disclosure, the MN sends a Radio Resource Control (RRC) reconfiguration message to the UE, and the UE receives the RRC reconfiguration message sent by the MN, wherein the RRC reconfiguration message includes at least one of the followings: at least one Secondary Node (SN) counter value or at least one set of SN counter values configured for each candidate Primary Secondary Cell (PSCell) and/or each candidate Secondary Cell Group (SCG); at least one SN counter value or at least one set of SN counter values configured for all candidate PSCells and/or all candidate SCGs of each SN; or at least one SN counter value or at least one set of SN counter values configured for all candidate PSCells and/or all candidate SCGs. Through the above configuration, the MN can configure appropriate SN counter values for the candidate PSCell and/or the candidate SCG through the RRC reconfiguration message, enabling the UE in the NR-DC scenario to determine the SN counter value used to perform selective activation of the cell group from the configured SN counter value. Accordingly, it may determine a new SN counter value through the obtained SN counter value *K_{SN},* and use the new *K_{SN}* to communicate with the SN, thereby enhancing the communication security between the UE and the SN.

To implement the communication method of the embodiments of the present disclosure, the embodiments of the present disclosure further provide a communication apparatus, which is configured on the MN. As shown in FIG. 3, the apparatus includes:
a first sending unit 301, configured to send a Radio Resource Control (RRC) reconfiguration message to a User Equipment (UE), wherein the RRC reconfiguration message includes at least one of the followings:
at least one Secondary Node (SN) counter value or at least one set of SN counter values configured for each candidate Primary Secondary Cell (PSCell) and/or each candidate Secondary Cell Group (SCG);
at least one SN counter value or at least one set of SN counter values configured for all candidate PSCells and/or all candidate SCGs of each SN; or
at least one SN counter value or at least one set of SN counter values configured for all candidate PSCells and/or all candidate SCGs.

In an embodiment, the number or the cumulative number of SN counter values configured for each candidate PSCell and/or each candidate SCG is used to indicate the maximum number of times allowed to return to or access a same candidate PSCell and/or a same candidate SCG.

In an embodiment, the number or the cumulative number of SN counter values configured for all candidate PSCells and/or all candidate SCGs of each SN is used to indicate the maximum number of times allowed to return to or access a same SN.

In an embodiment, the number or the cumulative number of SN counter values configured for all candidate PSCells and/or all candidate SCGs is used to indicate the maximum number of times allowed to selectively activate the PSCell and/or the SCG.

In an embodiment, the configured at least one SN counter value or at least one set of SN counter values is indicated by at least one of the followings:
at least one SN counter value;
a range of SN counter values and one or more increments;
one SN counter value, one variation range, and one or more increments; or
one SN counter value and one or more increments;
wherein the increment is an increment of the SN counter value.

In an embodiment, the multiple increments are used to indicate at least one of the followings:
different increments are used when the UE returns to or accesses a same candidate PSCell and/or a same candidate SCG again or for two consecutive times;
different increments are used when the UE performs selective activation of the PSCell and/or the SCG again or for two consecutive times;
different increments are used when the UE accesses the candidate PSCell and/or the candidate SCG again or for two consecutive times; or
different increments are used when the UE returns to or accesses a same SN again or for two consecutive times.

In an embodiment, the RRC reconfiguration message further includes first information, and the first information is used to indicate at least one of the followings:
whether the SN counter value is recyclable or reusable;
a validity duration of the SN counter value; or
the number of times for validity of the SN counter value.

In an embodiment, one piece of first information corresponds to one SN counter value; or
one piece of first information corresponds to the SN counter value of one candidate PSCell and/or one candidate SCG; or
one piece of first information corresponds to the SN counter values of all candidate PSCells and/or all candidate SCGs; or
one piece of first information corresponds to the SN counter value of one SN.

In an embodiment, in the case that the first information indicates that the SN counter value is recyclable or reusable, only one SN counter value of one candidate PSCell and/or one candidate SCG is used to indicate that a same SN counter value is used when the UE returns to or accesses a same candidate PSCell and/or a same candidate SCG again or each time.

In an embodiment, in the case that the first information indicates that the SN counter value is recyclable or reusable, only one SN counter value of all candidate PSCells and/or all candidate SCGs of one SN is used to indicate that a same SN counter value is used when the UE returns to or accesses a same SN again or each time.

In an embodiment, in the case that the first information indicates that the SN counter value is recyclable or reusable, only one SN counter value of all candidate PSCells and/or all candidate SCGs is used to indicate at least one of the followings:
a same SN counter value is used when the UE performs selective activation of the PSCell and/or the SCG again or each time; or
a same SN counter value is used when the UE accesses the candidate PSCell and/or the candidate SCG again or each time.

In an embodiment, different SN counter values of one candidate PSCell and/or one candidate SCG are used to indicate that different SN counter values are used when the UE returns to or accesses a same candidate PSCell and/or a same candidate SCG again or each time or for two consecutive times.

**In** an embodiment, different SN counter values of all candidate PSCells and/or all candidate SCGs of one SN are used to indicate that different SN counter values are used when the UE returns to or accesses a same SN again, each time, or for two consecutive times.

**In** an embodiment, different SN counter values of all candidate PSCells and/or all candidate SCGs are used to indicate at least one of the followings:
different SN counter values are used when the UE performs selective activation of the PSCell and/or the SCG again or each time or for two consecutive times; or
different SN counter values are used when the UE accesses the candidate PSCell and/or the candidate SCG again, each time, or for two consecutive times.

In an embodiment, in the case that there is only one SN counter value of one candidate PSCell and/or one candidate SCG, or only one SN counter value of one SN, or only one SN counter value of all candidate PSCells and/or all candidate SCGs, the apparatus further includes:
a first processing unit, configured to indicate an updated SN counter value to the UE in the case that the SN counter value is invalid, or the UE fails to access the SN by using the SN counter value.

In an embodiment, the first processing unit is further configured to store a used SN counter value and automatically update the SN counter value.

In practical applications, the first sending unit 301 can be implemented by a processor in the communication apparatus in combination with a communication interface, and the first processing unit can be implemented by the processor in the communication apparatus.

It should be noted that the communication apparatus provided in the above embodiments is illustrated by dividing the functions into the aforementioned program modules when performing communication. In practical applications, the above processing can be assigned to different program modules as needed, that is, an internal structure of the apparatus is divided into different program modules to complete all or part of the processing described above. In addition, the above embodiments of the communication apparatus are based on a same concept as the embodiments of the communication method. For the detailed implementation process of the apparatus embodiments, it may refer to that of the method embodiments, which will not be repeated here.

To implement the communication method of the embodiments of the present disclosure, the embodiments of the present disclosure further provide a communication apparatus, which is configured on a User Equipment (UE). As shown in FIG. 4, the apparatus includes:
a first receiving unit 401, configured to receive a Radio Resource Control (RRC) reconfiguration message sent by a Master Node (MN), wherein the RRC reconfiguration message includes at least one of the followings:
at least one Secondary Node (SN) counter value or at least one set of SN counter values configured for each candidate Primary Secondary Cell (PSCell) and/or each candidate Secondary Cell Group (SCG);
at least one SN counter value or at least one set of SN counter values configured for all candidate PSCells and/or all candidate SCGs of each SN; or
at least one SN counter value or at least one set of SN counter values configured for all candidate PSCells and/or all candidate SCGs.

In an embodiment, the number or the cumulative number of SN counter values configured for each candidate PSCell and/or each candidate SCG is used to indicate the maximum number of times allowed to return to or access a same candidate PSCell and/or a same candidate SCG.

In an embodiment, the number or the cumulative number of SN counter values configured for all candidate PSCells and/or all candidate SCGs of each SN is used to indicate the maximum number of times allowed to return to or access a same SN.

In an embodiment, the number or the cumulative number of SN counter values configured for all candidate PSCells and/or all candidate SCGs is used to indicate the maximum number of times allowed to selectively activate the PSCell and/or the SCG.

In an embodiment, the configured at least one SN counter value or at least one set of SN counter values is indicated by at least one of the followings:
at least one SN counter value;
a range of SN counter values and one or more increments;
one SN counter value, one variation range, and one or more increments; or
one SN counter value and one or more increments;
wherein the increment is an increment of the SN counter value.

In an embodiment, the multiple increments are used to indicate at least one of the followings:
different increments are used when the UE returns to or accesses a same candidate PSCell and/or a same candidate SCG again or for two consecutive times;
different increments are used when the UE performs consecutive selective activation of the SCG again or for two consecutive times;
different increments are used when the UE accesses the candidate PSCell or the candidate SCG again or for two consecutive times; or
different increments are used when the UE returns to or accesses a same SN again or for two consecutive times.

In an embodiment, in the case that there is no available SN counter value, the apparatus further includes a second processing unit, wherein the second processing unit is configured to perform at least one of the followings:
no longer returning to, or accessing, or evaluating the candidate PSCell and/or the candidate SCG corresponding to the SN counter value;
no longer returning to, or accessing, or evaluating the SN corresponding to the SN counter value;
no longer returning to, or accessing, or evaluating all candidate PSCells and/or all candidate SCGs of the SN corresponding to the SN counter value;
deleting the configuration of the corresponding candidate PSCell and/or the corresponding candidate SCG;
deleting the configuration of all candidate PSCells and/or all candidate SCGs of the corresponding SN;
no longer returning to, or accessing, or evaluating all candidate PSCells and/or all candidate SCGs;
deleting the configuration of all candidate PSCells and/or all candidate SCGs of the corresponding SN; or
stopping the procedure of selective activation of the PSCell and/or the SCG.

In an embodiment, the RRC reconfiguration message further includes first information; and the first information is used to indicate at least one of the followings:
whether the SN counter value is recyclable or reusable;
a validity duration of the SN counter value; or
the number of times for validity of the SN counter value.

In an embodiment, one piece of first information corresponds to one SN counter value; or
one piece of first information corresponds to the SN counter value of one candidate PSCell and/or one candidate SCG; or
one piece of first information corresponds to the SN counter values of all candidate PSCells and/or all candidate SCGs; or
one piece of first information corresponds to the SN counter value of one SN.

In an embodiment, the apparatus further includes:
a determination unit, configured to determine an SN counter value to be used when performing at least one of the followings:
accessing or returning to a same SN;
accessing or returning to a same candidate PSCell and/or a same candidate SCG;
accessing the candidate PSCell and/or SCG; or
selective activation of the PSCell and/or the SCG.

In an embodiment, the second processing unit is further configured to perform at least one of the followings:
in the case that there is only one SN counter value of one candidate PSCell and/or SCG, and the first information indicates that the SN counter value is recyclable or reusable, a same SN counter value is used each time when returning to or accessing a same candidate PSCell or a same candidate SCG;
in the case that there is only one SN counter value of all candidate PSCells and/or SCGs of one SN, and the first information indicates that the SN counter value is recyclable or reusable, a same SN counter value is used each time when returning to or accessing a same SN; or
in the case that there is only one SN counter value of all candidate PSCells and/or SCGs, and the first information indicates that the SN counter value is recyclable or reusable, a same SN counter value is used each time when performing selective activation of the PSCell or the SCG, or a same SN counter value is used each time when accessing the candidate PSCell or the candidate SCG.

In an embodiment, the second processing unit is further configured to perform at least one of the followings:
in the case that one candidate PSCell and/or one candidate SCG has different SN counter values, different SN counter values are used in sequence when returning to or accessing a same candidate PSCell or a same candidate SCG again or each time or for two consecutive times;
in the case that all candidate PSCells and/or SCGs have different SN counter values, different SN counter values are used in sequence when performing selective activation of the PSCell or the SCG again or each time or for two consecutive times, or different SN counter values are used in sequence when accessing the candidate PSCell or the candidate SCG again or each time or for two consecutive times; or
in the case that one SN has different SN counter values, different SN counter values are used in sequence when returning to or accessing a same SN again or each time or for two consecutive times.

In an embodiment, in the case that the validity duration and/or the number of times for validity of the SN counter value indicated by the first information is exceeded, the second processing unit is further configured to perform at least one of the followings:
deleting or no longer using the SN counter value;
no longer returning to, or accessing, or evaluating the candidate PSCell and/or the candidate SCG corresponding to the SN counter value;
no longer returning to, or accessing, or evaluating the SN corresponding to the SN counter value;
no longer returning to, or accessing, or evaluating all candidate PSCells and/or all candidate SCGs of the SN corresponding to the SN counter value;
deleting the configuration of the corresponding candidate PSCell and/or the corresponding candidate SCG;
deleting the configuration of all candidate PSCells and/or all candidate SCGs of the corresponding SN;
no longer returning to, or accessing, or evaluating all candidate PSCells and/or all candidate SCGs;
deleting the configuration of all candidate PSCells and/or all candidate SCGs; or
stopping the procedure of selective activation of the PSCell and/or the SCG.

In an embodiment, in the case that there is only one SN counter value of one candidate PSCell and/or one candidate SCG, or only one SN counter value of one SN, or only one SN counter value of all candidate PSCells and/or all candidate SCGs, the apparatus further includes:
a second receiving unit, configured to receive an updated SN counter value indicated by the MN in the case that the SN counter value is invalid, or the UE fails to access the SN by using the SN counter value.

In an embodiment, the second processing unit is further configured to access the first SN by using the second SN counter value in the case that at least one of the followings is met:
the first SN counter value is invalid;
accessing to the first SN by using the first SN counter value fails; or
the first SN rejects to be accessed;
wherein the first SN counter value and the second SN counter value are both SN counter values for the first SN in the RRC reconfiguration message.

In an embodiment, the second processing unit is further configured to store a used SN counter value and automatically update the SN counter value.

In practical applications, the first receiving unit 401 and the second receiving unit can be implemented by a processor in a communication apparatus in combination with a communication interface, and the determination unit, the second processing unit and an acquisition unit can be implemented by the processor in the communication apparatus.

It should be noted that the communication apparatus provided in the above embodiments is illustrated by dividing the functions into the aforementioned program modules when performing communication. In practical applications, the above processing can be assigned to different program modules as needed, that is, an internal structure of the apparatus is divided into different program modules to complete all or part of the processing described above. In addition, the communication apparatus embodiments provided above are based on a same concept as the communication method embodiments. For the detailed implementation process, it may refer to the method embodiments, which will not be repeated here.

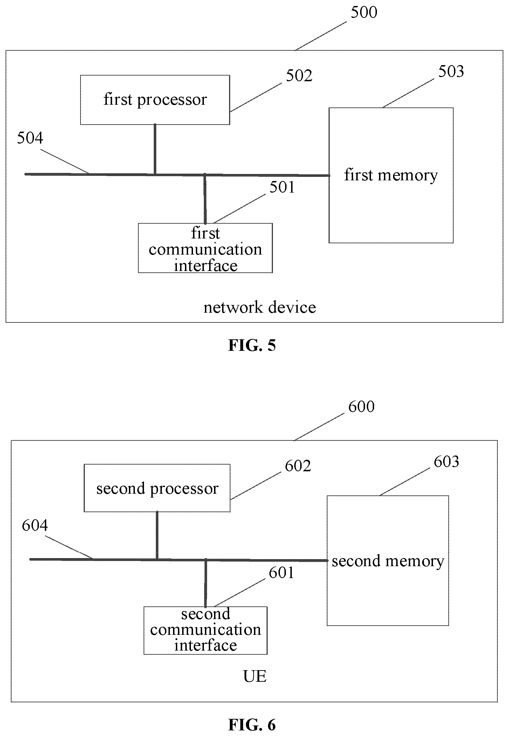

Based on the hardware implementation of the above program modules, and in order to implement the method on a Master Node (MN) side of the embodiments of the present disclosure, the embodiments of the present disclosure further provide a network device, the network device includes the MN, as shown in FIG. 5, a network device 500 includes:
a first communication interface 501, configured to exchange information with other network nodes;
a first processor 502, connected to the first communication interface 501 to implement information exchange with other network nodes, and configured to execute the method provided by one or more technical solutions on the MN side when running a computer program. The computer program is stored in a first memory 503.

Specifically, the first communication interface 501 is configured to send a Radio Resource Control (RRC) reconfiguration message to a User Equipment (UE); wherein the RRC reconfiguration message includes at least one of the followings:
at least one Secondary Node (SN) counter value or at least one set of SN counter values configured for each candidate Primary Secondary Cell (PSCell) and/or each candidate Secondary Cell Group (SCG);
at least one SN counter value or at least one set of SN counter values configured for all candidate PSCells and/or all candidate SCGs of each SN; or
at least one SN counter value or at least one set of SN counter values configured for all candidate PSCells and/or all candidate SCGs.

In an embodiment, the number or the cumulative number of SN counter values configured for each candidate PSCell and/or each candidate SCG is used to indicate the maximum number of times allowed to return to or access a same candidate PSCell and/or a same candidate SCG.

In an embodiment, the number or the cumulative number of SN counter values configured for all candidate PSCells and/or all candidate SCGs of each SN is used to indicate the maximum number of times allowed to return to or access a same SN.

In an embodiment, the number or the cumulative number of SN counter values configured for all candidate PSCells and/or all candidate SCGs is used to indicate the maximum number of times allowed to selectively activate the PSCell and/or the SCG.

In an embodiment, the configured at least one SN counter value or at least one set of SN counter values is indicated by at least one of the followings:
at least one SN counter value;
a range of SN counter values and one or more increments;
one SN counter value, one variation range, and one or more increments; or
one SN counter value and one or more increments;
wherein the increment is an increment of the SN counter value.

In an embodiment, the multiple increments are used to indicate at least one of the followings:
different increments are used when the UE returns to or accesses a same candidate PSCell and/or a same candidate SCG again or for two consecutive times;
different increments are used when the UE performs selective activation of the PSCell and/or the SCG again or for two consecutive times;
different increments are used when the UE accesses the candidate PSCell and/or the candidate SCG again or for two consecutive times; or
different increments are used when the UE returns to or accesses a same SN again or for two consecutive times.

In an embodiment, the RRC reconfiguration message further includes first information, and the first information is used to indicate at least one of the followings:
whether the SN counter value is recyclable or reusable;
a validity duration of the SN counter value; or
the number of times for validity of the SN counter value.

In an embodiment, one piece of first information corresponds to one SN counter value; or
one piece of first information corresponds to the SN counter value of one candidate PSCell and/or one candidate SCG; or
one piece of first information corresponds to the SN counter values of all candidate PSCells and/or all candidate SCGs; or
one piece of first information corresponds to the SN counter value of one SN.

In an embodiment, in the case that the first information indicates that the SN counter value is recyclable or reusable, only one SN counter value of one candidate PSCell and/or one candidate SCG is used to indicate that a same SN counter value is used when the UE returns to or accesses a same candidate PSCell and/or a same candidate SCG again or each time.

In an embodiment, in the case that the first information indicates that the SN counter value is recyclable or reusable, only one SN counter value of all candidate PSCells and/or all candidate SCGs of one SN is used to indicate that a same SN counter value is used when the UE returns to or accesses a same SN again or each time.

In an embodiment, in the case that the first information indicates that the SN counter value is recyclable or reusable, only one SN counter value of all candidate PSCells and/or all candidate SCGs is used to indicate at least one of the followings:
a same SN counter value is used when the UE performs selective activation of the PSCell and/or the SCG again or each time; or
a same SN counter value is used when the UE accesses the candidate PSCell and/or the candidate SCG again or each time.

In an embodiment, different SN counter values of one candidate PSCell and/or one candidate SCG are used to indicate that different SN counter values are used when the UE returns to or accesses a same candidate PSCell and/or a same candidate SCG again or each time or for two consecutive times.

In an embodiment, different SN counter values of all candidate PSCells and/or all candidate SCGs of one SN are used to indicate that different SN counter values are used when the UE returns to or accesses a same SN again, each time, or for two consecutive times.

In an embodiment, different SN counter values of all candidate PSCells and/or all candidate SCGs are used to indicate at least one of the followings:
different SN counter values are used when the UE performs selective activation of the PSCell and/or the SCG again or each time or for two consecutive times; or
different SN counter values are used when the UE accesses the candidate PSCell and/or the candidate SCG again, each time, or for two consecutive times.

In an embodiment, in the case that there is only one SN counter value of one candidate PSCell and/or one candidate SCG, or only one SN counter value of one SN, or only one SN counter value of all candidate PSCells and/or all candidate SCGs, the first processor 502 is configured to indicate an updated SN counter value to the UE in the case that the SN counter value is invalid, or the UE fails to access the SN by using the SN counter value.

In an embodiment, the first processor 502 is further configured to store a used SN counter value and automatically update the SN counter value.

It should be noted that the specific processing process of the first processor 502 and the first communication interface 501 can be understood with reference to the above method.

It should be noted that, in practical applications, the various components in the network device 500 are coupled together through a bus system 504. It can be understood that the bus system 504 is configured to facilitate connection and communication between these components. In addition to the data bus, the bus system 504 further includes a power bus, a control bus and a status signal bus. However, for clarity, all buses are marked as the bus system 504 in FIG. 5.

The first memory 503 in the embodiment of the present disclosure is configured to store various types of data to support the operation of the network device 500. Examples of such data include any computer program used for operation on the network device 500.

The method disclosed in the above embodiments of the present disclosure can be applied to the first processor 502, or implemented by the first processor 502. The first processor 502 may be an integrated circuit chip with signal processing capabilities. In the implementation process, each step of the above method can be implemented by integrated logic circuits in the hardware of the first processor 502 or by instructions in the form of software. The above first processor 502 may be a general-purpose processor, a Digital Signal Processor (DSP), or other programmable logic devices, discrete gates or transistor logic devices, discrete hardware components, etc. The first processor 502 can implement or execute the methods, steps and logic block diagrams disclosed in the embodiments of the present disclosure. The general-purpose processor may be a microprocessor or any conventional processor, etc. The steps of the method disclosed in the embodiments of the present disclosure may be directly executed by a hardware decoding processor, or by a combination of hardware and software modules in the decoding processor. The software module may reside in a storage medium, which is located in the first memory 503. The first processor 502 reads information from the first memory 503 and, in combination with its hardware, completes the above method steps.

In an exemplary embodiment, the network device 500 may be implemented by one or more Application-Specific Integrated Circuits (ASICs), Digital Signal Processors (DSPs), Programmable Logic Devices (PLDs), Complex Programmable Logic Devices (CPLDs), Field Programmable Gate Arrays (FPGAs), general-purpose processors, controllers, Micro Controller Units (MCUs), microprocessors, or other electronic components to execute the aforementioned method.

Based on the hardware implementation of the above program modules, and in order to implement the methods on the UE side according to the embodiments of the present disclosure, the embodiments of the present disclosure further provide a User Equipment (UE), as shown in FIG. 6, a UE 600 includes:
a second communication interface 601, configured to exchange information with other network nodes;
a second processor 602, connected to the second communication interface 601 to implement information exchange with other network nodes, and configured to execute the method provided by one or more technical solutions on the UE side when running a computer program. The computer program is stored in a second memory 603.

Specifically, the second communication interface 601 is configured to receive a Radio Resource Control (RRC) reconfiguration message sent by a Master Node (MN), wherein the RRC reconfiguration message includes at least one of the followings:
at least one Secondary Node (SN) counter value or at least one set of SN counter values configured for each candidate Primary Secondary Cell (PSCell) and/or each candidate Secondary Cell Group (SCG);
at least one SN counter value or at least one set of SN counter values configured for all candidate PSCells and/or all candidate SCGs of each SN; or
at least one SN counter value or at least one set of SN counter values configured for all candidate PSCells and/or all candidate SCGs.

In an embodiment, the number or the number or the cumulative number of SN counter values configured for each candidate PSCell and/or each candidate SCG is used to indicate the maximum number of times allowed to return to or access a same candidate PSCell and/or a same candidate SCG.

In an embodiment, the number or the cumulative number of SN counter values configured for all candidate PSCells and/or all candidate SCGs of each SN is used to indicate the maximum number of times allowed to return to or access a same SN.

In an embodiment, the number or the cumulative number of SN counter values configured for all candidate PSCells and/or all candidate SCGs is used to indicate the maximum number of times allowed to selectively activate the PSCell and/or the SCG.

In an embodiment, the configured at least one SN counter value or at least one set of SN counter values is indicated by at least one of the followings:
at least one SN counter value;
a range of SN counter values and one or more increments;
one SN counter value, one variation range, and one or more increments; or
one SN counter value and one or more increments;
wherein the increment is an increment of the SN counter value.

In an embodiment, the multiple increments are used to indicate at least one of the followings:
different increments are used when the UE returns to or accesses a same candidate PSCell and/or a same candidate SCG again or for two consecutive times;
different increments are used when the UE performs consecutive selective activation of the SCG again or for two consecutive times;
different increments are used when the UE accesses the candidate PSCell or the candidate SCG again or for two consecutive times; or
different increments are used when the UE returns to or accesses a same SN again or for two consecutive times.

In an embodiment, in the case that there is no available SN counter value, the second processor 602 is configured to perform at least one of the followings:
no longer returning to, or accessing, or evaluating the candidate PSCell and/or the candidate SCG corresponding to the SN counter value;
no longer returning to, or accessing, or evaluating the SN corresponding to the SN counter value;
no longer returning to, or accessing, or evaluating all candidate PSCells and/or all candidate SCGs of the SN corresponding to the SN counter value;
deleting the configuration of the corresponding candidate PSCell and/or SCG;
deleting the configuration of all candidate PSCells and/or all candidate SCGs of the corresponding SN;
no longer returning to, or accessing, or evaluating all candidate PSCells and/or all candidate SCGs;
deleting the configuration of all candidate PSCells and/or all candidate SCGs; or
stopping the procedure of selective activation of the PSCell and/or the SCG.

In an embodiment, the RRC reconfiguration message further includes first information, and the first information is used to indicate at least one of the followings:
whether the SN counter value is recyclable or reusable;
a validity duration of the SN counter value; or
the number of times for validity of the SN counter value.

In an embodiment, one piece of first information corresponds to one SN counter value; or
one piece of first information corresponds to the SN counter value of one candidate PSCell and/or one candidate SCG; or
one piece of first information corresponds to the SN counter values of all candidate PSCells and/or all candidate SCGs; or
one piece of first information corresponds to the SN counter value of one SN.

In an embodiment, the second processor 602 is further configured to determine an SN counter value to be used when performing at least one of the followings:
accessing or returning to a same SN;
accessing or returning to a same candidate PSCell and/or a same candidate SCG;
accessing the candidate PSCell and/or SCG; or
selective activation of the PSCell and/or the SCG.

In an embodiment, the second processor 602 is further configured to perform at least one of the followings:
in the case that there is only one SN counter value of one candidate PSCell and/or SCG, and the first information indicates that the SN counter value is recyclable or reusable, a same SN counter value is used each time when returning to or accessing a same candidate PSCell or a same candidate SCG;
in the case that there is only one SN counter value of all candidate PSCells and/or SCGs of one SN, and the first information indicates that the SN counter value is recyclable or reusable, a same SN counter value is used each time when returning to or accessing a same SN; or
in the case that there is only one SN counter value of all candidate PSCells and/or SCGs, and the first information indicates that the SN counter value is recyclable or reusable, a same SN counter value is used each time when performing selective activation of the PSCell or the SCG, or a same SN counter value is used each time when accessing the candidate PSCell or the candidate SCG.

In an embodiment, the second processor 602 is further configured to perform at least one of the followings:
in the case that one candidate PSCell and/or one candidate SCG has different SN counter values, different SN counter values are used in sequence when returning to or accessing a same candidate PSCell or a same candidate SCG again or each time or for two consecutive times;
in the case that all candidate PSCells and/or SCGs have different SN counter values, different SN counter values are used in sequence when performing selective activation of the PSCell or the SCG again or each time or for two consecutive times, or different SN counter values are used in sequence when accessing the candidate PSCell or the candidate SCG again or each time or for two consecutive times; or
in the case that one SN has different SN counter values, different SN counter values are used in sequence when returning to or accessing a same SN again or each time or for two consecutive times.

In an embodiment, in the case that the validity duration and/or the number of times for validity of the SN counter value indicated by the first information is exceeded, the second processor 602 is further configured to perform at least one of the followings:
deleting or no longer using the SN counter value;
no longer returning to, or accessing, or evaluating the candidate PSCell and/or the candidate SCG corresponding to the SN counter value;
no longer returning to, or accessing, or evaluating the SN corresponding to the SN counter value;
no longer returning to, or accessing, or evaluating all candidate PSCells and/or all candidate SCGs of the SN corresponding to the SN counter value;
deleting the configuration of the corresponding candidate PSCell and/or the corresponding candidate SCG;
deleting the configuration of all candidate PSCells and/or all candidate SCGs of the corresponding SN;
no longer returning to, or accessing, or evaluating all candidate PSCells and/or all candidate SCGs;
deleting the configuration of all candidate PSCells and/or all candidate SCGs; or
stopping the procedure of selective activation of the PSCell and/or the SCG.

In an embodiment, in the case that there is only one SN counter value of one candidate PSCell and/or one candidate SCG, or only one SN counter value of one SN, or only one SN counter value of all candidate PSCells and/or all candidate SCGs, the second communication interface 601 is further configured to receive an updated SN counter value indicated by the MN in the case that the SN counter value is invalid, or the UE fails to access the SN by using the SN counter value.

In an embodiment, the second processor 602 is further configured to access the first SN by using the second SN counter value in the case that at least one of the followings is met:
the first SN counter value is invalid;
accessing to the first SN by using the first SN counter value fails; or
the first SN rejects to be accessed;
wherein the first SN counter value and the second SN counter value are both SN counter values for the first SN in the RRC reconfiguration message.

In an embodiment, the second processor 602 is further configured to store a used SN counter value and automatically update the SN counter value.

It should be noted that the specific processing process of the second processor 602 and the second communication interface 601 can be understood with reference to the above methods.

It should be noted that, in practical applications, the various components in the UE 600 are coupled together through a bus system 604. It can be understood that the bus system 604 is configured to facilitate connection and communication between these components. In addition to the data bus, the bus system 604 further includes a power bus, a control bus and a status signal bus. However, for clarity, all buses are marked as the bus system 604 in FIG. 6.

The second memory 603 in the embodiments of the present disclosure is configured to store various types of data to support the operation of the UE 600. Examples of such data include any computer program used for operation on the UE 600.

The method disclosed in the above embodiments of the present disclosure can be applied to the second processor 602, or implemented by the second processor 602. The second processor 602 may be an integrated circuit chip with signal processing capabilities. In the implementation process, each step of the above methods can be implemented by integrated logic circuit in the hardware of the second processor 602 or by instructions in the form of software. The above second processor 602 may be a general-purpose processor, a Digital Signal Processor (DSP), or other programmable logic devices, discrete gate or transistor logic devices, discrete hardware components, etc. The second processor 602 can implement or execute the methods, steps and logic block diagrams disclosed in the embodiments of the present disclosure. The general-purpose processor may be a microprocessor or any conventional processor, etc. The steps of the method disclosed in the embodiments of the present disclosure may be directly executed by a hardware decoding processor, or by a combination of hardware and software modules in the decoding processor. The software module may reside in a storage medium, which is located in the second memory 603. The second processor 602 reads information from the second memory 603 and, in combination with its hardware, implements the above method steps.

In an exemplary embodiment, the UE 600 may be implemented by one or more ASICs, DSPs, PLDs, CPLDs, FPGAs, general-purpose processors, controllers, MCUs, microprocessors, or other electronic components to perform the aforementioned methods.

It can be understood that each of the memories (first memory 503 and second memory 603) in the embodiments of the present disclosure may be a volatile memory or a non-volatile memory, or may include both volatile and non-volatile memory. The non-volatile memory may be Read-Only Memory (ROM), programmable Read-Only Memory (PROM), Erasable Programmable Read-Only Memory (EPROM), Electrically Erasable Programmable Read-Only Memory (EEPROM), Ferroelectric Random Access Memory (FRAM), Flash Memory, magnetic surface memory, optical discs, or Compact Disc Read-Only Memory (CD-ROM); the magnetic surface memory may be a disk memory or a tape memory. The volatile memory can be Random Access Memory (RAM), which is used as an external high-speed cache. By way of example but not limitation, many forms of RAM are available, such as Static Random Access Memory (SRAM), Synchronous Static Random Access Memory (SSRAM), Dynamic Random Access Memory (DRAM), Synchronous Dynamic Random Access Memory (SDRAM), Double Data Rate Synchronous Dynamic Random Access Memory (DDRSDRAM), Enhanced Synchronous Dynamic Random Access Memory (ESDRAM), Synchronous Link Dynamic Random Access Memory (SLDRAM), Direct Rambus Random Access Memory (DRRAM). The memory described in the embodiments of the present disclosure is intended to include, but is not limited to, these and any other suitable types of memory.

For example, the embodiments of the present disclosure further provide a storage medium, namely a computer storage medium, specifically a non-transitory computer-readable storage medium. For example, it includes a first memory 503 storing a computer program, and the computer program can be executed by the first processor 502 of the network device 500 to perform the steps of the aforementioned methods on the MN side. For another example, it includes a second memory 603 storing a computer program, and the computer program can be executed by the second processor 602 of the UE 600 to perform the steps of the aforementioned methods on the UE side. The computer-readable storage medium may be a memory such as FRAM, ROM, PROM, EPROM, EEPROM, Flash Memory, magnetic surface storage, optical disk, or CD-ROM.

It should be noted that the terms "first", "second" and the like are used to distinguish similar objects, and are not intended to describe a specific order or sequence.

In this document, the term "and/or" is merely intended to describe an association relationship between associated objects, indicating that there can be three relationships, for example, A and/or B can mean: A exists alone, A and B exist simultaneously, and B exists alone. In addition, the term "at least one" as used herein refers to any one of a plurality of items or any combination of at least two of those items. For example, "at least one of A, B, or C" may refer to any one or more elements selected from the group consisting of A, B, and C.

In addition, the technical solutions described in the embodiments of the present disclosure may be freely combined, provided that there is no conflict between them.

The above are only preferred embodiments of the present disclosure, and are not intended to limit the protection scope of the present disclosure.

## Claims

1. A communication method, performed by a Master Node (MN), comprising:
sending a Radio Resource Control (RRC) reconfiguration message to a User Equipment (UE), wherein the RRC reconfiguration message comprises at least one of the followings:
at least one Secondary Node (SN) counter value or at least one set of SN counter values configured for each candidate Primary Secondary Cell (PSCell) and/or each candidate Secondary Cell Group (SCG);
at least one SN counter value or at least one set of SN counter values configured for all candidate PSCells and/or all candidate SCGs of each SN; or
at least one SN counter value or at least one set of SN counter values configured for all candidate PSCells and/or all candidate SCGs.

2. The method according to claim 1, wherein the number or the cumulative number of SN counter values configured for each candidate PSCell and/or each candidate SCG is used to indicate the maximum number of times allowed to return to or access the same candidate PSCell and/or the same candidate SCG.

3. The method according to claim 1, wherein the number or the cumulative number of SN counter values configured for all candidate PSCells and/or all candidate SCGs of each SN is used to indicate the maximum number of times allowed to return to or access the same SN.

4. The method according to claim 1, wherein the number or the cumulative number of SN counter values configured for all candidate PSCells and/or all candidate SCGs is used to indicate the maximum number of times allowed to selective activation of the PSCell and/or the SCG.

5. The method according to claim 1, wherein the configured at least one SN counter value or at least one set of SN counter values is indicated by at least one of the followings:
at least one SN counter value;
a range of SN counter values and one or more increments;
one SN counter value, one variation range, and one or more increments; or
one SN counter value and one or more increments;
wherein the increment is an increment of the SN counter value.

6. The method according to claim 5, wherein the multiple increments are used to indicate at least one of the followings:
different increments are used when the UE returns to or accesses the same candidate PSCell and/or the same candidate SCG again or for two consecutive times;
different increments are used when the UE performs selective activation of the PSCell and/or the SCG again or for two consecutive times;
different increments are used when the UE accesses the candidate PSCell and/or the candidate SCG again or for two consecutive times; or
different increments are used when the UE returns to or accesses the same SN again or for two consecutive times.

7. The method according to claim 1, wherein the RRC reconfiguration message further comprises the first information, and the first information is used to indicate at least one of the followings:
whether the SN counter value is recyclable or reusable;
a validity duration of the SN counter value; or
the number of times for validity of the SN counter value.

8. The method according to claim 7, wherein
one piece of first information corresponds to one SN counter value; or
one piece of first information corresponds to the SN counter value of one candidate PSCell and/or one candidate SCG; or
one piece of first information corresponds to the SN counter values of all candidate PSCells and/or all candidate SCGs; or
one piece of first information corresponds to the SN counter value of one SN.

9. The method according to claim 7, wherein in the case that the first information indicates that the SN counter value is recyclable or reusable, only one SN counter value of one candidate PSCell and/or one candidate SCG is used to indicate that the same SN counter value is used when the UE returns to or accesses the same candidate PSCell and/or the same candidate SCG again or each time.

10. The method according to claim 7, wherein in the case that the first information indicates that the SN counter value is recyclable or reusable, only one SN counter value of all candidate PSCells and/or all candidate SCGs of one SN is used to indicate that the same SN counter value is used when the UE returns to or accesses the same SN again or each time.

11. The method according to claim 7, wherein in the case that the first information indicates that the SN counter value is recyclable or reusable, only one SN counter value of all candidate PSCells and/or all candidate SCGs is used to indicate at least one of the followings:
the same SN counter value is used when the UE performs selective activation of the PSCell and/or the SCG again or each time; or
the same SN counter value is used when the UE accesses the candidate PSCell and/or the candidate SCG again or each time.

12. The method according to any one of claims 1 to 8, wherein different SN counter values of one candidate PSCell and/or one candidate SCG are used to indicate that different SN counter values are used when the UE returns to or accesses that candidate PSCell and/or the same candidate SCG again or each time or for two consecutive times.

13. The method according to any one of claims 1 to 8, wherein different SN counter values of all candidate PSCells and/or all candidate SCGs of one SN are used to indicate that different SN counter values are used when the UE returns to or accesses that SN again, each time, or for two consecutive times.

14. The method according to any one of claims 1 to 8, wherein different SN counter values of all candidate PSCells and/or all candidate SCGs are used to indicate at least one of the followings:
different SN counter values are used when the UE performs selective activation of the PSCell and/or the SCG again or each time or for two consecutive times; or
different SN counter values are used when the UE accesses the candidate PSCell and/or the candidate SCG again, each time, or for two consecutive times.

15. The method according to claim 1, wherein in the case that there is only one SN counter value of one candidate PSCell and/or one candidate SCG, or only one SN counter value of one SN, or only one SN counter value of all candidate PSCells and/or all candidate SCGs, the method further comprises:
indicating an updated SN counter value to the UE in the case that the SN counter value is invalid, or the UE fails to access the SN by using the SN counter value.

16. The method according to claim 1, further comprising:
storing a used SN counter value and automatically updating the SN counter value.

17. A communication method, performed by a User Equipment (UE), comprising:
receiving a Radio Resource Control (RRC) reconfiguration message sent by a Master Node (MN), wherein the RRC reconfiguration message comprises at least one of the followings:
at least one Secondary Node (SN) counter value or at least one set of SN counter values configured for each candidate Primary Secondary Cell (PSCell) and/or each candidate Secondary Cell Group (SCG);
at least one SN counter value or at least one set of SN counter values configured for all candidate PSCells and/or all candidate SCGs of each SN; or
at least one SN counter value or at least one set of SN counter values configured for all candidate PSCells and/or all candidate SCGs.

18. The method according to claim 17, wherein the number or the cumulative number of SN counter values configured for each candidate PSCell and/or each candidate SCG is used to indicate the maximum number of times allowed to return to or access the same candidate PSCell and/or the same candidate SCG.

19. The method according to claim 17, wherein the number or the cumulative number of SN counter values configured for all candidate PSCells and/or all candidate SCGs of each SN is used to indicate the maximum number of times allowed to return to or access the same SN.

20. The method according to claim 17, wherein the number or the cumulative number of SN counter values configured for all candidate PSCells and/or all candidate SCGs is used to indicate the maximum number of times allowed to selective activation of the PSCell and/or the SCG.

21. The method according to claim 17, wherein the configured at least one SN counter value or at least one set of SN counter values is indicated by at least one of the followings:
at least one SN counter value;
a range of SN counter values and one or more increments;
one SN counter value, one variation range, and one or more increments; or
one SN counter value and one or more increments;
wherein the increment is an increment of the SN counter value.

22. The method according to claim 21, wherein the multiple increments are used to indicate at least one of the followings:
different increments are used when the UE returns to or accesses the same candidate PSCell and/or the same candidate SCG again or for two consecutive times;
different increments are used when the UE performs consecutive selective activation of the SCG again or for two consecutive times;
different increments are used when the UE accesses the candidate PSCell or the candidate SCG again or for two consecutive times; or
different increments are used when the UE returns to or accesses the same SN again or for two consecutive times.

23. The method according to any one of claims 17 to 22, wherein in the case that there is no available SN counter value, the method further comprises at least one of the followings:
no longer returning to, or accessing, or evaluating the candidate PSCell and/or the candidate SCG corresponding to the SN counter value;
no longer returning to, or accessing, or evaluating the SN corresponding to the SN counter value;
no longer returning to, or accessing, or evaluating all candidate PSCells and/or all candidate SCGs of the SN corresponding to the SN counter value;
deleting the configuration of the corresponding candidate PSCell and/or the corresponding candidate SCG;
deleting the configuration of all candidate PSCells and/or all candidate SCGs of the corresponding SN;
no longer returning to, or accessing, or evaluating all candidate PSCells and/or all candidate SCGs;
deleting the configuration of all candidate PSCells and/or all candidate SCGs; or
stopping the procedure of selective activation of the PSCell and/or the SCG.

24. The method according to claim 17, wherein the RRC reconfiguration message further comprises the first information, and the first information is used to indicate at least one of the followings:
whether the SN counter value is recyclable or reusable;
a validity duration of the SN counter value; or
the number of times for validity of the SN counter value.

25. The method according to claim 24, wherein
one piece of first information corresponds to one SN counter value; or
one piece of first information corresponds to the SN counter value of one candidate PSCell and/or one candidate SCG; or
one piece of first information corresponds to the SN counter values of all candidate PSCells and/or all candidate SCGs; or
one piece of first information corresponds to the SN counter value of one SN.

26. The method according to any one of claims 17 to 22 and 24 to 25, further comprising: determining the SN counter value to be used when performing at least one of the followings:
accessing or returning to the same SN;
accessing or returning to the same candidate PSCell and/or the same candidate SCG;
accessing the candidate PSCell and/or SCG; or
selective activation of the PSCell and/or the SCG.

27. The method according to claim 24, further comprising at least one of the followings:
in the case that there is only one SN counter value of one candidate PSCell and/or SCG, and the first information indicates that the SN counter value is recyclable or reusable, the same SN counter value is used each time when returning to or accessing the same candidate PSCell or the same candidate SCG;
in the case that there is only one SN counter value of all candidate PSCells and/or SCGs of one SN, and the first information indicates that the SN counter value is recyclable or reusable, the same SN counter value is used each time when returning to or accessing the same SN; or
in the case that there is only one SN counter value of all candidate PSCells and/or SCGs, and the first information indicates that the SN counter value is recyclable or reusable, the same SN counter value is used each time when performing selective activation of the PSCell or the SCG, or the same SN counter value is used each time when accessing the candidate PSCell or the candidate SCG.

28. The method according to any one of claims 17 to 22 and 24 to 25, further comprising at least one of the followings:
in the case that one candidate PSCell and/or one candidate SCG has different SN counter values, the different SN counter values are used in sequence when returning to or accessing that candidate PSCell or that candidate SCG again or each time or for two consecutive times;
in the case that all candidate PSCells and/or SCGs have different SN counter values, the different SN counter values are used in sequence when performing selective activation of the PSCell or the SCG again or each time or for two consecutive times, or the different SN counter values are used in sequence when accessing the candidate PSCell or the candidate SCG again or each time or for two consecutive times; or
in the case that one SN has different SN counter values, the different SN counter values are used in sequence when returning to or accessing that SN again or each time or for two consecutive times.

29. The method according to claim 24, wherein in the case that the validity duration and/or the number of times for validity of the SN counter value indicated by the first information is exceeded, the method further comprises at least one of the followings:
deleting or no longer using the SN counter value;
no longer returning to, or accessing, or evaluating the candidate PSCell and/or the candidate SCG corresponding to the SN counter value;
no longer returning to, or accessing, or evaluating the SN corresponding to the SN counter value;
no longer returning to, or accessing, or evaluating all candidate PSCells and/or all candidate SCGs of the SN corresponding to the SN counter value;
deleting the configuration of the corresponding candidate PSCell and/or the corresponding candidate SCG;
deleting the configuration of all candidate PSCells and/or all candidate SCGs of the corresponding SN;
no longer returning to, or accessing, or evaluating all candidate PSCells and/or all candidate SCGs;
deleting the configuration of all candidate PSCells and/or all candidate SCGs; or
stopping the procedure of selective activation of the PSCell and/or the SCG.

30. The method according to claim 17, in the case that there is only one SN counter value of one candidate PSCell and/or one candidate SCG, or only one SN counter value of one SN, or only one SN counter value of all candidate PSCells and/or all candidate SCGs, the method further comprises:
receiving an updated SN counter value indicated by the MN in the case that the SN counter value is invalid, or the UE fails to access the SN by using the SN counter value.

31. The method according to any one of claims 17 to 22 and 24 to 25, further comprising:
using the second SN counter value to access the first SN in the case that at least one of the followings is met:
the first SN counter value is invalid;
accessing to the first SN by using the first SN counter value fails; or
the first SN rejects to be accessed;
wherein the first SN counter value and the second SN counter value are both SN counter values for the first SN in the RRC reconfiguration message.

32. The method according to claim 17, further comprising:
storing a used SN counter value and automatically updating the SN counter value.

33. A communication apparatus, comprising:
a first sending unit configured to send a Radio Resource Control (RRC) reconfiguration message to a User Equipment (UE); wherein the RRC reconfiguration message comprises at least one of the followings:
at least one Secondary Node (SN) counter value or at least one set of SN counter values configured for each candidate Primary Secondary Cell (PSCell) and/or each candidate Secondary Cell Group (SCG);
at least one SN counter value or at least one set of SN counter values configured for all candidate PSCells and/or all candidate SCGs of each SN; or
at least one SN counter value or at least one set of SN counter values configured for all candidate PSCells and/or all candidate SCGs.

34. A communication apparatus, comprising:
a first receiving unit configured to receive a Radio Resource Control (RRC) reconfiguration message sent by a Master Node (MN); wherein the RRC reconfiguration message comprises at least one of the followings:
at least one Secondary Node (SN) counter value or at least one set of SN counter values configured for each candidate Primary Secondary Cell (PSCell) and/or all candidate Secondary Cell Group (SCG);
at least one SN counter value or at least one set of SN counter values configured for all candidate PSCells and/or all candidate SCGs of each SN; or
at least one SN counter value or at least one set of SN counter values configured for all candidate PSCells and/or all candidate SCGs.

35. A network device, comprising a first processor and a first communication interface, wherein
the first communication interface is configured to send a Radio Resource Control (RRC) reconfiguration message to a User Equipment (UE), wherein the RRC reconfiguration message comprises at least one of the followings:
at least one Secondary Node (SN) counter value or at least one set of SN counter values configured for each candidate Primary Secondary Cell (PSCell) and/or each candidate Secondary Cell Group (SCG);
at least one SN counter value or at least one set of SN counter values configured for all candidate PSCells and/or all candidate SCGs of each SN; or
at least one SN counter value or at least one set of SN counter values configured for all candidate PSCells and/or all candidate SCGs.

36. A User Equipment (UE), comprising a second processor and a second communication interface, wherein
the second communication interface is configured to receive a Radio Resource Control (RRC) reconfiguration message sent by a Master Node (MN), wherein the RRC reconfiguration message comprises at least one of the followings:
at least one Secondary Node (SN) counter value or at least one set of SN counter values configured for each candidate Primary Secondary Cell (PSCell) and/or each candidate Secondary Cell Group (SCG);
at least one SN counter value or at least one set of SN counter values configured for all candidate PSCells and/or all candidate SCGs of each SN; or
at least one SN counter value or at least one set of SN counter values configured for all candidate PSCells and/or all candidate SCGs.

37. A network device, comprising a first processor and a first memory configured to store a computer program executable on the first processor,
wherein the first processor is configured to execute the computer program, to implement the steps of the method according to any one of claims 1 to 16.

38. A UE, comprising a second processor and a second memory configured to store a computer program executable on the second processor,
wherein the second processor is configured to execute the computer program, to implement the steps of the method according to any one of claims 17 to 32.

39. A computer-readable storage medium storing thereon a computer program, wherein the computer program is used to be executed by a processor to implement the steps of the method according to any one of claims 1 to 16, or implement the steps of the method according to any one of claims 17 to 32.

40. A computer program product comprising instructions, wherein the instructions are used to be executed by a processor, to implement the steps of the method according to any one of claims 1 to 16, or implement the steps of the method according to any one of claims 17 to 32.
